(19) **Europäisches Patentamt / European Patent Office / Office européen des brevets**

(11) **EP 4 468 774 A1**

(12) **EUROPEAN PATENT APPLICATION**
published in accordance with Art. 153(4) EPC

(43) Date of publication:
**27.11.2024 Bulletin 2024/48**

(21) Application number: **23759313.2**

(22) Date of filing: **27.02.2023**

(51) International Patent Classification (IPC):
**H04W 24/02** (2009.01)

(52) Cooperative Patent Classification (CPC):
**H04B 17/309; H04W 24/02; H04W 24/08**

(86) International application number:
**PCT/CN2023/078366**

(87) International publication number:
**WO 2023/160692 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 CN 202210193794**

(71) Applicant: **Huawei Technologies Co., Ltd.**
**Shenzhen, Guangdong 518129 (CN)**

(72) Inventors:
- **LI, Xi**
  **Shenzhen, Guangdong 518129 (CN)**
- **LIU, Xianda**
  **Shenzhen, Guangdong 518129 (CN)**
- **GAO, Xiang**
  **Shenzhen, Guangdong 518129 (CN)**
- **LIU, Kunpeng**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND COMMUNICATION APPARATUS**

(57) This application provides a communication method and a communication apparatus, to improve, in an application scenario in which a data stream received by a terminal device comes from different network devices, accuracy of a CQI determined by the terminal device, so that accuracy of downlink channel quality subsequently obtained by the network device based on the CQI is improved, thereby improving communication efficiency. In the method, a terminal device receives first configuration information, where the first configuration information includes configuration information of n CSI-RSs, and n is an integer greater than 1. The terminal device receives the n CSI-RSs based on the first configuration information. The terminal device determines a CQI based on m CSI-RSs and a mapping relationship, where the CQI indicates channel quality of a PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

FIG. 3

## Description

This application claims priority to Chinese Patent Application No. 202210193794.2, filed with the China National Intellectual Property Administration on February 28, 2022 and entitled "COMMUNICATION METHOD AND COMMUNICATION APPARATUS", which is incorporated herein by reference in its entirety.

## TECHNICAL FIELD

This application relates to the field of wireless technologies, and in particular, to a communication method and a communication apparatus.

## BACKGROUND

In a communication system, a network device may determine downlink channel quality information based on channel state information (channel state information, CSI) sent by a terminal device. The CSI includes a channel quality indicator (channel quality indicator, CQI), a precoding matrix indicator (precoding matrix indicator, PMI), and the like. The CQI is used as an example. The network device may further determine a code rate, a modulation and coding scheme (modulation and coding scheme, MCS), spectral efficiency, or the like based on the CQI.

Currently, after receiving a channel state information reference signal (channel state information reference signal, CSI-RS), in a process in which the terminal device measures a CQI of a downlink channel, the terminal device needs to determine a mapping relationship between a data stream transmitted on the downlink channel and a CSI-RS port. A single-station communication scenario is used as an example. After receiving a CSI-RS from a network device, the terminal device may perform CQI measurement based on a mapping relationship between a data stream transmitted on a downlink channel and a CSI-RS port of the network device.

In addition, in a scenario (for example, the scenario may include a communication scenario of non-coherent joint transmission (non-coherent joint transmission, NCJT)) in which different network devices respectively transmit independent data streams to the terminal device, a data stream received by the terminal device comes from only one network device, so that after the terminal device receives CSI-RSs from the different network devices, the terminal device may still perform CQI measurement based on the mapping relationship in the foregoing single-station communication scenario. That the different network devices include a network device 1 and a network device 2 is used as an example. The terminal device needs to report one CQI based on a mapping relationship between a data stream transmitted on a downlink channel between the terminal device and the network device 1 and a CSI-RS port of the network device 1, and based on a mapping relationship between a data stream transmitted on a downlink channel between the terminal device and the network device 2 and a CSI-RS port of the network device 2.

However, in a scenario (for example, the scenario may include a communication scenario of coherent transmission (coherent joint transmission, CJT)) in which data streams transmitted between different network devices and the terminal device are no longer independent, because a data stream received by the terminal device comes from a plurality of different network devices, when the terminal device still performs CQI measurement based on the foregoing single-station communication scenario, the CQI measurement is easily to be inaccurate. Consequently, accuracy of downlink channel quality obtained by the network device based on a CQI is reduced, and communication efficiency is affected.

## SUMMARY

A first aspect of this application provides a communication method. The method is performed by a terminal device, the method is performed by some components (for example, a processor, a chip, or a chip system) in the terminal device, or the method may be implemented by a logic module or software that can implement all or some functions of the terminal device. In the first aspect and possible implementations of the first aspect, an example in which the communication method is performed by the terminal device is used for description. In the method, the terminal device receives first configuration information, where the first configuration information includes configuration information of n CSI-RSs, and n is an integer greater than 1. The terminal device receives the n CSI-RSs based on the first configuration information. The terminal device determines a CQI based on m CSI-RSs and a mapping relationship, where the CQI indicates channel quality of a physical downlink shared channel (physical downlink shared channel, PDSCH), the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

According to the foregoing technical solution, after the terminal device receives the n CSI-RSs based on the first configuration information, the terminal device determines the CQI based on the m CSI-RSs in the n CSI-RSs and the mapping relationship. The CQI indicates the channel quality of the PDSCH, and the mapping relationship used to determine the CQI is the mapping relationship between the data stream of the PDSCH and the CSI-RS ports corresponding to the m CSI-RSs, where m is the integer greater than 1, that is, the m CSI-RSs come from different network devices. In other words, in a scenario in which a single data stream in data streams of the PDSCH comes from a plurality of different network devices, in a process in which the terminal device determines the CQI, the terminal device considers/assumes (assume) that there is the mapping relationship between the data stream of the PDSCH and CSI-RS ports corresponding to the different network devices, so that the terminal device determines, based on the mapping relationship, a correspondence between the data stream of the PDSCH and the different network devices, and determines and sends the CQI. Therefore, in an application scenario in which the data stream received by the terminal device comes from the different network devices, accuracy of the CQI determined by the terminal device is improved, so that accuracy of the downlink channel quality subsequently obtained by the network device based on the CQI is improved, thereby improving communication efficiency.

It should be understood that the n CSI-RSs received by the terminal device respectively come from n different network devices. A coordination relationship between the n different network devices and a network device that sends the first configuration information are not limited in this application. For example, the n different network devices may include one primary network device (or referred to as a serving transmission reception point (transmission reception point, TRP)) and n-1 secondary network devices (or referred to as coordinated TRPs). In this case, the network device that sends the first configuration information may be the primary network device or any secondary network device. For another example, in the n different network devices, a primary network device and a secondary network device may not be distinguished. In this case, the network device that sends the first configuration information may be any one of the n network devices.

It should be understood that, in a possible implementation of the first aspect, the mapping relationship is that each data stream of the PDSCH is mapped, based on a precoding matrix corresponding to the data stream, to all CSI-RS ports corresponding to the m CSI-RSs. In other words, the mapping relationship indicates that each data stream of the PDSCH is mapped, based on a precoding matrix corresponding to the data stream, to all CSI-RS ports corresponding to the m CSI-RSs.

Based on the mapping relationship, a data stream of the PDSCH may be mapped to a plurality of CSI-RS ports. Because each CSI-RS may correspond to one network device (for example, a TRP), the data stream of the PDSCH may be jointly sent through a plurality of TRPs. A precoding matrix corresponding to the data stream can ensure phase coherence between the plurality of TRPs.

In a possible implementation of the first aspect, before the determining a CQI based on m CSI-RSs and a mapping relationship, the method further includes: determining the m CSI-RSs from the n CSI-RSs.

According to the foregoing technical solution, after the terminal device receives the n CSI-RSs, the terminal device determines the CQI based on some or all of the n CSI-RSs (that is, the m CSI-RSs). In other words, after the terminal device selects some or all CSI-RSs (that is, the m CSI-RSs) from the n CSI-RSs based on a pre-configured selection mechanism, the terminal device may further determine the CQI based on the selected m CSI-RSs. Therefore, the terminal device can flexibly select, from the n CSI-RSs, the m CSI-RSs that meet the pre-configured selection mechanism, to improve flexibility of implementing the solution.

In a possible implementation of the first aspect, the determining the m CSI-RSs from the n CSI-RSs includes: determining the m CSI-RSs based on a first parameter and the n CSI-RSs, where the first parameter includes a value of m or a first threshold.

Optionally, the first parameter is pre-configured in the terminal device.

Optionally, the first parameter is sent by the network device to the terminal device, and the first parameter may be included in the first configuration information or other information.

It should be understood that the first threshold may indicate a transmission performance threshold, for example, a reference signal received power (reference signal received power, RSRP) threshold, a reference signal received quality (reference signal received quality, RSRQ) threshold, or another performance parameter threshold. This is not limited herein.

In a possible implementation of the first aspect, the n CSI-RSs correspond to a plurality of measurement assumptions, and the measurement assumption is used to determine the m CSI-RSs corresponding to the CQI.

According to the foregoing technical solution, the n CSI-RSs respectively correspond to the n different network devices, and any two or more of the n different network devices may form a coordination set that provides a communication service. Each coordination set may be referred to as a measurement assumption, that is, the n CSI-RSs correspond to the plurality of measurement assumptions, and one of the plurality of measurement assumptions corresponds to the m CSI-RSs, so that the measurement assumption can determine the m CSI-RSs corresponding to the CQI.

In a possible implementation of the first aspect, the method further includes: receiving first indication information, where the first indication information indicates at least one of the plurality of measurement assumptions; and determining one measurement assumption from the at least one measurement assumption, where the measurement assumption corresponds to the m CSI-RSs.

Optionally, the first indication information is included in the first configuration information, or the first indication information is included in other information. This is not limited herein.

According to the foregoing technical solution, the terminal device may further determine, based on the at least one measurement assumption indicated by the first indication information, one of the plurality of measurement assumptions corresponding to the n CSI-RSs, and determine, based on a network device corresponding to the measurement assumption, the m CSI-RSs corresponding to the CQI.

It should be understood that the first indication information may be used to include an index of a network device corresponding to the at least one measurement assumption. The first indication information may alternatively include an index of a CSI-RS corresponding to the at least one measurement assumption. The first indication information may alternatively include an index of a CSI-RS port set of a network device corresponding to the at least one measurement assumption. The first indication information may alternatively indicate the at least one of the plurality of measurement assumptions in another manner. This is not limited herein.

In a possible implementation of the first aspect, the method further includes: receiving second indication information, where the second indication information indicates a power offset corresponding to each CSI-RS in the at least one of the plurality of measurement assumptions. The power offset indicates a ratio of first signal energy to second signal energy, the first signal energy is energy per resource element (energy per resource element, EPRE) of the data stream that is of the PDSCH and that is mapped to a CSI-RS port corresponding to each CSI-RS, and the second signal energy is EPRE of each CSI-RS. That the terminal device determines a CQI based on m CSI-RSs and a mapping relationship includes: The terminal device determines the CQI based on the second indication information, the m CSI-RSs, and the mapping relationship.

Optionally, the second indication information is included in the first configuration information, or the second indication information is included in other information. This is not limited herein.

According to the foregoing technical solution, in the PDSCH indicated by the CQI, when the CQI is calculated, it is assumed that the data stream of the PDSCH is mapped to the CSI-RS port corresponding to each CSI-RS, and there is usually a specific offset between the EPRE of the data stream and the EPRE of the CSI-RS. Therefore, the power offset indicated by the second indication information received by the terminal device indicates the offset, so that impact of the offset can be reduced or eliminated based on the power offset in a process in which the terminal device determines the CQI, to further improve the accuracy of the CQI determined by the terminal device.

In addition, in this implementation, the second indication information indicates the power offset corresponding to each CSI-RS in the at least one of the plurality of measurement assumptions. In other words, the power offset received by the terminal device may be configured by using the measurement assumption as a configuration granularity. Different measurement assumptions correspond to different network devices participating in coordination, so that a same CSI-RS may correspond to different power offsets in different measurement assumptions. In a configuration manner in which the measurement assumption is used as the configuration granularity, the accuracy of the CQI obtained based on the power offset can be further improved.

In a possible implementation of the first aspect, the method further includes: receiving second indication information, where the second indication information indicates a power offset corresponding to each of the n CSI-RSs. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS. That the terminal device determines a CQI based on m CSI-RSs and a mapping relationship includes: The terminal device determines the CQI based on the second indication information, the m CSI-RSs, and the mapping relationship.

Optionally, the second indication information is included in the first configuration information, or the second indication information is included in other information. This is not limited herein.

According to the foregoing technical solution, in the PDSCH indicated by the CQI, when the CQI is calculated, it is assumed that the data stream of the PDSCH is mapped to the CSI-RS port corresponding to each CSI-RS, and there is usually a specific offset between the EPRE of the data stream and the EPRE of the CSI-RS. Therefore, the power offset indicated by the second indication information received by the terminal device indicates the offset, so that impact of the offset can be reduced or eliminated based on the power offset in a process in which the terminal device determines the CQI, to further improve the accuracy of the CQI determined by the terminal device.

In addition, in this implementation, the second indication information indicates the power offset corresponding to each of the n CSI-RSs. In other words, the power offset received by the terminal device may be configured by using the CSI-RS as a configuration granularity, that is, the second indication information indicates power offsets respectively corresponding to the n CSI-RSs. In this way, after determining the m CSI-RSs corresponding to the CQI, the terminal device may determine, from the power offsets respectively corresponding to the n CSI-RSs, power offsets respectively corresponding to the m CSI-RSs. This is easy to implement.

Optionally, it can be learned from the foregoing two possible implementations that the power offset indicates the ratio of the first signal energy to the second signal energy. In the first signal energy and the second signal energy, in addition to the foregoing definition that "the first signal energy is EPRE of the data stream that is of the PDSCH and that is mapped to a CSI-RS port corresponding to each CSI-RS, and the second signal energy is EPRE of each CSI-RS", for the power offset corresponding to each of the m (or n) CSI-RSs, there may also be other definitions. Examples are as follows:

Example 1: The first signal energy is energy of each data stream that is of the PDSCH and that is mapped to the CSI-RS, and the second signal energy is energy of one CSI-RS port of the CSI-RS.
Example 2: The first signal energy is a sum of energy, on one RE, of all data streams that are of the PDSCH and that are mapped to the CSI-RS, and the second signal energy is a sum of energy of each CSI-RS port of the CSI-RS.
Example 3: The first signal energy is a sum of energy of all data streams that are of the PDSCH and that are mapped to the CSI-RS, and the second signal energy is EPRE of the CSI-RS.

In a possible implementation of the first aspect, the power offset that corresponds to each CSI-RS and that is indicated by the second indication information is the same.

According to the foregoing technical solution, the power offset that corresponds to each CSI-RS and that is indicated by the second indication information is the same, so that configuration of the second indication information can be simplified, overheads can be reduced, and implementation is easy.

In a possible implementation of the first aspect, each piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource.

According to the foregoing technical solution, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, the n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

In a possible implementation of the first aspect, the CQI is included in CSI, and the CSI further includes at least one of the following:

indexes of CSI-RS port sets corresponding to the m CSI-RSs;
indexes of the m CSI-RSs; or
a precoding matrix indicator (precoding matrix indicator, PMI), where the PMI indicates precoding matrices corresponding to CSI-RS port sets corresponding to the m CSI-RSs.

According to the foregoing technical solution, after the terminal device receives the n CSI-RSs, the CQI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the CQI.

In a possible implementation of the first aspect, the mapping relationship satisfies:

$$
\begin{bmatrix} y_{j=0}^{(3000)}(i) \\ \dots \\ y_{j=0}^{(3000+P_0-1)}(i) \\ \dots \\ y_{j=n-1}^{(3000)}(i) \\ \dots \\ y_{j=n-1}^{(3000+P_{n-1}-1)}(i) \end{bmatrix} = \begin{bmatrix} W_0(i) \\ \vdots \\ W_{n-1}(i) \end{bmatrix} \begin{bmatrix} x^{(0)}(i) \\ \dots \\ x^{(v-1)}(i) \end{bmatrix}
$$

$x^{(k)}(i)$, where $k = 0, 1, ...,$ or $v-1$, represents a $k^{th}$ data stream of a PDSCH on an $i^{th}$ OFDM symbol; $y_j^{(p)}(i)$, where $j=0, 1, ...,$ or $n-1$, and $p=3000, ...,$ or $3000+Pn-1$, represents a data stream that is of the PDSCH and that is transmitted on an $m^{th}$ CSI-RS port of a $j^{th}$ CSI-RS, where $m=0, ...,$ or $P_j-1$; and $W_j(i)$ represents a precoding matrix that corresponds to the $j^{th}$ CSI-RS and to which a data stream of the PDSCH is mapped.

According to the foregoing technical solution, a specific implementation for determining the mapping relationship between the data stream of the PDSCH and the CSI-RS ports corresponding to the m CSI-RSs is provided. In this implementation, n port sets and n precoding matrices that correspond to the n CSI-RSs are included, so that the mapping relationship does not change due to a change of a value (that is, the value of m) of the CSI-RS corresponding to the CQI.

In a possible implementation of the first aspect, in $W_0(i)$, ..., and $W_{n-1}(i)$, a quantity of non-zero matrices is m.

Optionally, for the $j^{th}$ CSI-RS in the n CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where k = 0, 1, ..., or v-1, represents the $k^{th}$ data stream of the PDSCH on the $i^{th}$ orthogonal frequency division multiplexing OFDM symbol; $y_j^{(p)}(i)$, where j=0, 1, ..., or n-1, and p=3000, ..., or $3000 + P_{n-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

According to the foregoing technical solution, in the foregoing implementation of the mapping relationship used to determine the CQI, because the CQI is determined based on the m CSI-RSs in the n CSI-RSs, m precoding matrices in the n precoding matrices in this implementation are non-zero matrices.

In addition, in the foregoing implementation, except that the m precoding matrices corresponding to the m CSI-RSs are the non-zero matrices, other n-m matrices may be zero matrices, to simplify calculation complexity and reflect the mapping relationship more accurately.

In a possible implementation of the first aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix}$$

$x^{(k)}(i)$, where k = 0, 1, ..., or v-1, represents a $k^{th}$ data stream of a PDSCH on an $i^{th}$ orthogonal frequency division multiplexing OFDM symbol; $y_j^{(p)}(i)$, where j=0, 1, ..., or m-1, and p=3000, ..., or $3000 + P_{m-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

Optionally, for the $j^{th}$ CSI-RS in the m CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where k = 0, 1, ... , or v-1, represents the $k^{th}$ data stream of the PDSCH on the $i^{th}$ orthogonal frequency division multiplexing OFDM symbol; $y_j^{(p)}(i)$, where j=0, 1, ..., or m-1, and p=3000, ..., or $3000 + P_{m-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

According to the foregoing technical solution, a specific implementation for determining the mapping relationship between the data stream of the PDSCH and the CSI-RS ports corresponding to the m CSI-RSs is provided. In this implementation, m port sets and m precoding matrices that correspond to the m CSI-RSs used to determine the CQI are included, to simplify calculation complexity and reflect the mapping relationship more accurately.

A second aspect of this application provides a communication method. The method is performed by a network device, the method is performed by some components (for example, a processor, a chip, or a chip system) in the network device, or the method may be implemented by a logic module or software that can implement all or some functions of the network device. In the second aspect and possible implementations of the second aspect, an example in which the communication method is performed by the network device is used for description. In the method, the network device determines first configuration information, where the first configuration information includes configuration information of n CSI-RSs, and n is an integer greater than 1. The network device sends one of the n CSI-RSs based on the first configuration information. The network device receives a CQI, where the CQI is determined based on m CSI-RSs and a mapping relationship. The CQI indicates channel quality of a physical downlink shared channel PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

According to the foregoing technical solution, after the network device sends one of the n CSI-RSs based on the first configuration information, the network device receives the CQI. The CQI indicates the channel quality of the PDSCH, and there is the mapping relationship between the data stream of the PDSCH indicated by the CQI and the CSI-RS ports corresponding to the m CSI-RSs, where m is the integer greater than 1, that is, the m CSI-RSs come from different network devices. In other words, in a scenario in which the data stream of the PDSCH comes from different network devices, in a process in which a terminal device determines the CQI, the terminal device considers/assumes (assume) that there is the mapping relationship between the data stream of the PDSCH and CSI-RS ports corresponding to the different network devices, so that the terminal device determines, based on the mapping relationship, a correspondence between the data stream of the PDSCH and the different network devices, and determines and sends the CQI. Therefore, in an application scenario in which the data stream received by the terminal device comes from the different network devices, accuracy of the CQI determined by the terminal device is improved, so that accuracy of the downlink channel quality subsequently obtained by the network device based on the CQI is improved, thereby improving communication efficiency.

It should be understood that the n CSI-RSs received by the terminal device respectively come from n different network devices. In this application, the network device that performs the second aspect and the possible implementations of the second aspect may be any one of the n different network devices. This is not limited in this application. For example, the n different network devices may include one primary network device (or referred to as a serving transmission reception point (transmission reception point, TRP)) and n-1 secondary network devices (or referred to as coordinated TRPs). In this case, the network device that performs the second aspect and the possible implementations of the second aspect may be the primary network device or any secondary network device. For another example, in the n different network devices, a primary network device and a secondary network device may not be distinguished. In this case, the network device that performs the second aspect and the possible implementations of the second aspect may be any one of the n network devices.

It should be understood that, in a possible implementation of the second aspect, the mapping relationship is that each data stream of the PDSCH is mapped, based on a precoding matrix corresponding to the data stream, to all CSI-RS ports corresponding to the m CSI-RSs. In other words, the mapping relationship indicates that each data stream of the PDSCH is mapped, based on a precoding matrix corresponding to the data stream, to all CSI-RS ports corresponding to the m CSI-RSs.

Based on the mapping relationship, a data stream of the PDSCH may be mapped to a plurality of CSI-RS ports. Because each CSI-RS may correspond to one network device (for example, a TRP), the data stream of the PDSCH may be jointly sent through a plurality of TRPs. A precoding matrix corresponding to the data stream can ensure phase coherence between the plurality of TRPs.

In a possible implementation of the second aspect, the n CSI-RSs correspond to a plurality of measurement assumptions, and the measurement assumption is used to determine the m CSI-RSs corresponding to the CQI.

According to the foregoing technical solution, the n CSI-RSs respectively correspond to the n different network devices, and any two or more of the n different network devices may form a coordination set that provides a communication service. Each coordination set may be referred to as a measurement assumption, that is, the n CSI-RSs correspond to the plurality of measurement assumptions, and one of the plurality of measurement assumptions corresponds to the m CSI-RSs, so that the measurement assumption can determine the m CSI-RSs corresponding to the CQI.

In a possible implementation of the second aspect, the method further includes: sending first indication information, where the first indication information indicates at least one of the plurality of measurement assumptions, and one of the at least one measurement assumption corresponds to the m CSI-RSs.

Optionally, the first indication information is included in the first configuration information, or the first indication information is included in other information. This is not limited herein.

According to the foregoing technical solution, the network device may further send the first indication information, so that the terminal device can determine, based on the at least one measurement assumption indicated by the first indication information, one of the plurality of measurement assumptions corresponding to the n CSI-RSs, and determine, based on a network device corresponding to the measurement assumption, the m CSI-RSs corresponding to the CQI.

It should be understood that the first indication information may be used to include an index of a network device corresponding to the at least one measurement assumption. The first indication information may alternatively include an index of a CSI-RS corresponding to the at least one measurement assumption. The first indication information may alternatively include an index of a CSI-RS port set of a network device corresponding to the at least one measurement assumption. The first indication information may alternatively indicate the at least one of the plurality of measurement assumptions in another manner. This is not limited herein.

In a possible implementation of the second aspect, the method further includes: sending second indication information, where the second indication information indicates a power offset corresponding to each CSI-RS in the at least one of the plurality of measurement assumptions. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

Optionally, the second indication information is included in the first configuration information, or the second indication information is included in other information. This is not limited herein.

According to the foregoing technical solution, in the PDSCH indicated by the CQI, when the CQI is calculated, it is assumed that the data stream of the PDSCH is mapped to the CSI-RS port corresponding to each CSI-RS, and there is usually a specific offset between the EPRE of the data stream and the EPRE of the CSI-RS. Therefore, the power offset indicated by the second indication information sent by the network device indicates the offset, so that impact of the offset can be reduced or eliminated based on the power offset in a process in which the terminal device determines the CQI, to further improve the accuracy of the CQI determined by the terminal device.

In addition, in this implementation, the second indication information indicates the power offset corresponding to each CSI-RS in the at least one of the plurality of measurement assumptions. In other words, the power offset sent by the network device may be configured by using the measurement assumption as a configuration granularity. Different measurement assumptions correspond to different network devices participating in coordination, so that a same CSI-RS may correspond to different power offsets in different measurement assumptions. In a configuration manner in which the measurement assumption is used as the configuration granularity, the accuracy of the CQI obtained based on the power offset can be further improved.

In a possible implementation of the second aspect, the method further includes: sending second indication information, where the second indication information indicates a power offset corresponding to each of the n CSI-RSs. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

Optionally, the second indication information is included in the first configuration information, or the second indication information is included in other information. This is not limited herein.

According to the foregoing technical solution, in the PDSCH indicated by the CQI, when the CQI is calculated, it is assumed that the data stream of the PDSCH is mapped to the CSI-RS port corresponding to each CSI-RS, and there is usually a specific offset between the EPRE of the data stream and the EPRE of the CSI-RS. Therefore, the power offset indicated by the second indication information sent by the network device indicates the offset, so that impact of the offset can be reduced or eliminated based on the power offset in a process in which the terminal device determines the CQI, to further improve the accuracy of the CQI determined by the terminal device.

In addition, in this implementation, the second indication information indicates the power offset corresponding to each of the n CSI-RSs. In other words, the power offset sent by the network device may be configured by using the CSI-RS as a configuration granularity, that is, the second indication information indicates power offsets respectively corresponding to the n CSI-RSs. In this way, after determining the m CSI-RSs corresponding to the CQI, the terminal device may determine, from the power offsets respectively corresponding to the n CSI-RSs, power offsets respectively corresponding to the m CSI-RSs. This is easy to implement.

Optionally, it can be learned from the foregoing two possible implementations that the power offset indicates the ratio of the first signal energy to the second signal energy. In the first signal energy and the second signal energy, in addition to the foregoing definition that "the first signal energy is EPRE of the data stream that is of the PDSCH and that is mapped to a CSI-RS port corresponding to each CSI-RS, and the second signal energy is EPRE of each CSI-RS", for the power offset corresponding to each of the m (or n) CSI-RSs, there may also be other definitions. Examples are as follows:

Example 1: The first signal energy is energy of each data stream that is of the PDSCH and that is mapped to the CSI-RS, and the second signal energy is energy of one CSI-RS port of the CSI-RS.
Example 2: The first signal energy is a sum of energy, on one RE, of all data streams that are of the PDSCH and that are mapped to the CSI-RS, and the second signal energy is a sum of energy of each CSI-RS port of the CSI-RS.
Example 3: The first signal energy is a sum of energy of all data streams that are of the PDSCH and that are mapped to the CSI-RS, and the second signal energy is EPRE of the CSI-RS.

In a possible implementation of the second aspect, the power offset that corresponds to each CSI-RS and that is indicated by the second indication information is the same.

According to the foregoing technical solution, the power offset that corresponds to each CSI-RS and that is indicated by the second indication information is the same, so that configuration of the second indication information can be simplified, overheads can be reduced, and implementation is easy.

In a possible implementation of the second aspect, each piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource.

According to the foregoing technical solution, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, the n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

In a possible implementation of the second aspect, the CQI is included in CSI, and the CSI further includes at least one of the following:

indexes of CSI-RS port sets corresponding to the m CSI-RSs;

indexes of the m CSI-RSs; or

a precoding matrix indicator PMI, where the PMI indicates precoding matrices of CSI-RS port sets corresponding to the m CSI-RSs.

According to the foregoing technical solution, after the terminal device receives the n CSI-RSs, the CQI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the CQI.

In a possible implementation of the second aspect, the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=n-1}^{(3000)}(i) \\
\cdots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\cdots \\
x^{(v-1)}(i)
\end{bmatrix}
$$

$x^{(k)}(i)$, where $k = 0, 1, ...,$ or $v-1$, represents a $k^{th}$ data stream of a PDSCH on an $i^{th}$ orthogonal frequency division multiplexing OFDM symbol; $y_j^{(p)}(i)$, where $j=0, 1, ...,$ or $n-1$, and $p=3000, ...,$ or $3000 + P_{n-1}$, represents a data stream that is of the PDSCH and that is transmitted on a $q^{th}$ CSI-RS port of a $j^{th}$ CSI-RS, where $q=0, ...,$ or $P_j-1$; and $W_j(i)$ represents a precoding matrix that corresponds to the $j^{th}$ CSI-RS and to which a data stream of the PDSCH is mapped.

According to the foregoing technical solution, a specific implementation for determining the mapping relationship between the data stream of the PDSCH and the CSI-RS ports corresponding to the m CSI-RSs is provided. In this implementation, n port sets and n precoding matrices that correspond to the n CSI-RSs are included, so that the mapping relationship does not change due to a change of a value (that is, a value of m) of the CSI-RS corresponding to the CQI.

In a possible implementation of the second aspect, in $W_0(i), ...,$ and $W_{n-1}(i)$, a quantity of non-zero matrices is m.

According to the foregoing technical solution, in the foregoing implementation of the mapping relationship used to determine the CQI, because the CQI is determined based on the m CSI-RSs in the n CSI-RSs, m precoding matrices in the n precoding matrices in this implementation are non-zero matrices.

Optionally, for the $j^{th}$ CSI-RS in the n CSI-RSs, where $j=0, ...,$ or $j=n-1$, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where $k = 0, 1, ..., $ or $v-1$, represents the $k^{th}$ data stream of the PDSCH on the $i^{th}$ orthogonal frequency division multiplexing OFDM symbol; $y_j^{(p)}(i)$, where $j=0, 1, ..., $ or $n-1$, and $p=3000, ..., $ or $3000 + P_{n-1}$, represents the data stream that is of the PDSCH and that is transmitted on the $q^{th}$ CSI-RS port of the $j^{th}$ CSI-RS, where $q=0, ..., $ or $P_j-1$; and $W_j(i)$ represents the precoding matrix that corresponds to the $j^{th}$ CSI-RS and to which the data stream of the PDSCH is mapped.

In a possible implementation of the second aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix}$$

$x^{(k)}(i)$, where $k = 0, 1, ..., $ or $v-1$, represents a $k^{th}$ data stream of a PDSCH on an $i^{th}$ orthogonal frequency division multiplexing OFDM symbol; $y_j^{(p)}(i)$, where $j=0, 1, ..., $ or $m-1$, and $p=3000, ..., $ or $3000 + P_{m-1}$, represents a data stream that is of the PDSCH and that is transmitted on a $q^{th}$ CSI-RS port of a $j^{th}$ CSI-RS, where $q=0, ..., $ or $P_j-1$; and $W_j(i)$ represents a precoding matrix that corresponds to the $j^{th}$ CSI-RS and to which a data stream of the PDSCH is mapped.

Optionally, for the $j^{th}$ CSI-RS in the m CSI-RSs, where $j=0, ..., $ or $j=n-1$, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where $k = 0, 1, ..., $ or $v-1$, represents the $k^{th}$ data stream of the PDSCH on the $i^{th}$ orthogonal frequency division multiplexing OFDM symbol; $y_j^{(p)}(i)$, where $j=0, 1, ..., $ or $m-1$, and $p=3000, ..., $ or $3000 + P_{m-1}$, represents the data stream that is of the PDSCH and that is transmitted on the $q^{th}$ CSI-RS port of the $j^{th}$ CSI-RS, where $q=0, ..., $ or $P_j-1$; and $W_j(i)$ represents the precoding matrix that corresponds to the $j^{th}$ CSI-RS and to which the data stream of the PDSCH is mapped.

According to the foregoing technical solution, a specific implementation for determining the mapping relationship between the data stream of the PDSCH and the CSI-RS ports corresponding to the m CSI-RSs is provided. In this implementation, m port sets and m precoding matrices that correspond to the m CSI-RSs used to determine the CQI are included, to simplify calculation complexity and reflect the mapping relationship more accurately.

A third aspect of this application provides a communication method. The method is performed by a terminal device, the method is performed by some components (for example, a processor, a chip, or a chip system) in the terminal device, or the method may be implemented by a logic module or software that can implement all or some functions of the terminal device. In the first aspect and possible implementations of the first aspect, an example in which the communication method is performed by the terminal device is used for description. In the method, the terminal device receives first configuration information, where the first configuration information includes configuration information of n CSI-RSs and codebook subset restriction (codebook subset restriction, CBSR) configuration information corresponding to the n CSI-RSs, the CBSR configuration information is used to configure a plurality of CBSRs, and n is an integer greater than 1. The terminal device receives the n CSI-RSs based on the first configuration information. The terminal device determines a PMI based on m CSI-RSs and m of the plurality of CBSRs, where the m CSI-RSs are included in the n CSI-RSs, m is an integer greater than 1, m is less than or equal to n, and the m CSI-RSs are in one-to-one correspondence with m pieces of CBSR information. The terminal device sends the PMI.

According to the foregoing technical solution, the first configuration information received by the terminal device includes the configuration information of the n CSI-RSs and the CBSR configuration information corresponding to the n CSI-RSs, and the CBSR configuration information is used to configure the plurality of CBSRs. Then, after the terminal device receives the n CSI-RSs based on the configuration information of the n CSI-RSs in the first configuration information, the terminal device determines the PMI based on the plurality of CBSRs configured by using the CBSR configuration information in the first configuration information, where m is the integer greater than 1, that is, the m CSI-RSs come from different network devices. In other words, both configuration information used by the terminal device to receive CSI-RSs from different network devices and configuration information of CBSRs corresponding to the different network devices are located in the first configuration information. In comparison with an implementation in which the terminal device needs to respectively receive configuration information from the different network devices, to respectively determine the configuration information of the CSI-RSs of the different network devices and the configuration information of the CBSRs corresponding to the different network devices, overheads can be reduced, and communication efficiency can be improved.

In addition, the foregoing technical solution may be applied to an application scenario in which a data stream received by the terminal device comes from the different network devices, so that the CBSRs of the different network devices are configured in the scenario. In this way, the terminal device determines that, in the application scenario, the CBSRs corresponding to the different network devices may be obtained based on the first configuration information, and the PMI may be sent based on the CBSR configuration information.

It should be understood that the n CSI-RSs received by the terminal device respectively come from n different network devices. A coordination relationship between the n different network devices and a network device that sends the first configuration information are not limited in this application. For example, the n different network devices may include one primary network device (or referred to as a serving transmission reception point (transmission reception point, TRP)) and n-1 secondary network devices (or referred to as coordinated TRPs). In this case, the network device that sends the first configuration information may be the primary network device or any secondary network device. For another example, in the n different network devices, a primary network device and a secondary network device may not be distinguished. In this case, the network device that sends the first configuration information may be any one of the n network devices.

In addition, in a plurality of pieces of CBSR information configured by using the CBSR configuration information, a matrix dimension of each piece of CBSR information is determined based on a quantity of CSI-RS ports corresponding to the CSI-RS.

In a possible implementation of the third aspect, that the CBSR configuration information is used to configure a plurality of CBSRs includes: The CBSR configuration information is used to configure at least one group of CBSRs, where each group of CBSRs include at least two CBSRs. Before that the terminal device determines a PMI based on m CSI-RSs and m of the plurality of CBSRs, the method further includes: The terminal device determines one group of CBSRs from the at least one group of CBSRs, where the group of CBSRs include the m CBSRs.

According to the foregoing technical solution, the CBSR configuration information in the first configuration information is used to configure the at least one group of CBSRs, so that before the terminal device determines the PMI, the m CBSRs included in the group of CBSRs determined by the terminal device in the at least one group of CBSRs are used as one of bases for determining the PMI. In other words, the CBSR configuration information in the first configuration information is used to configure the CBSR in a configuration manner in which the "group" is used as a granularity, so that after determining a group of CBSRs based on a pre-configured selection mechanism, the terminal device uses m CBSRs included in the group of CBSRs as one of bases for determining the PMI.

Optionally, when the at least one group of CBSRs configured by using the CBSR configuration information include a plurality of groups of CBSRs, different groups of CBSRs may correspond to different measurement assumptions.

For example, the n CSI-RSs respectively correspond to the n different network devices, and any two or more of the n different network devices may form a coordination set that provides a communication service. Each coordination set may be referred to as a measurement assumption, that is, the n CSI-RSs correspond to a plurality of measurement assumptions, and one of the plurality of measurement assumptions corresponds to the m CSI-RSs, so that the measurement assumption can determine the m CSI-RSs corresponding to the PMI. In addition, in this implementation, the CBSR configuration information is used to configure a plurality of groups of pieces of CBSR information, where the plurality of groups of pieces of CBSR information are in one-to-one correspondence with the plurality of measurement assumptions, and one group of the plurality of groups of pieces of CBSR information include the m pieces of CBSR information. In other words, the CBSR configuration information in the first configuration information is used to configure the CBSR in a configuration manner in which the "measurement assumption" is used as a granularity.

In a possible implementation of the third aspect, that the CBSR configuration information is used to configure a plurality of CBSRs includes: The CBSR configuration information is used to configure n CBSRs. Before that the terminal device determines a PMI based on m CSI-RSs and m of the plurality of CBSRs, the method further includes: The terminal device determines the m CBSRs from the n CBSRs.

According to the foregoing technical solution, the CBSR configuration information in the first configuration information is used to configure the n CBSRs, so that before the terminal device determines the PMI, the terminal device uses the m CBSRs included in the n CBSRs as one of bases for determining the PMI. In other words, the CBSR configuration information in the first configuration information is used to configure the CBSR in a configuration manner in which the "CSI-RS" is used as a granularity, so that the terminal device can use the m CBSRs included in the n CBSRs as one of the bases for determining the PMI.

In a possible implementation of the third aspect, one piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource.

According to the foregoing technical solution, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, the n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

In a possible implementation of the third aspect, the PMI is included in channel state information CSI, and the CSI further includes at least one of the following: indexes of CSI-RS port sets corresponding to the m CSI-RSs; or indexes of the m CSI-RSs.

According to the foregoing technical solution, after the terminal device receives the n CSI-RSs, the PMI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the PMI.

A fourth aspect of this application provides a communication method. The method is performed by a network device, the method is performed by some components (for example, a processor, a chip, or a chip system) in the network device, or the method may be implemented by a logic module or software that can implement all or some functions of the network device. In the second aspect and possible implementations of the second aspect, an example in which the communication method is performed by the network device is used for description. In the method, the network device determines first configuration information, where the first configuration information includes configuration information of n CSI-RSs and CBSR configuration information corresponding to the n CSI-RSs, the CBSR configuration information is used to configure a plurality of CBSRs, and n is an integer greater than 1. The network device sends one of the n CSI-RSs based on the first configuration information. The network device receives a PMI, where the PMI corresponds to m CSI-RSs, the m CSI-RSs are included in the n CSI-RSs, m is an integer greater than 1, m is less than or equal to n, and the m CSI-RSs are in one-to-one correspondence with m pieces of CBSR information configured by using the CBSR configuration information.

According to the foregoing technical solution, the first configuration information sent by the network device includes the configuration information of the n CSI-RSs and the CBSR configuration information corresponding to the n CSI-RSs, and the CBSR configuration information is used to configure the plurality of CBSRs. Then, after a terminal device receives the n CSI-RSs based on the configuration information of the n CSI-RSs in the first configuration information, the terminal device determines the PMI based on the plurality of CBSRs configured by using the CBSR configuration information in the first configuration information, where m is the integer greater than 1, that is, the m CSI-RSs come from different network devices. In other words, both configuration information used by the terminal device to receive CSI-RSs from different network devices and configuration information of CBSRs corresponding to the different network devices are located in the first configuration information. In comparison with an implementation in which the terminal device needs to respectively receive configuration information from the different network devices, to respectively determine the configuration information of the CSI-RSs of the different network devices and the configuration information of the CBSRs corresponding to the different network devices, overheads can be reduced, and communication efficiency can be improved.

In addition, the foregoing technical solution may be applied to an application scenario in which a data stream received by the terminal device comes from the different network devices, so that the CBSRs of the different network devices are configured in the scenario. In this way, the terminal device determines that, in the application scenario, the CBSRs corresponding to the different network devices may be obtained based on the first configuration information, and the PMI may be sent based on the CBSR configuration information.

It should be understood that the n CSI-RSs received by the terminal device respectively come from n different network devices. In this application, the network device that performs the fourth aspect and the possible implementations of the fourth aspect may be any one of the n different network devices. This is not limited in this application. For example, the n different network devices may include one primary network device (or referred to as a serving transmission reception point (transmission reception point, TRP)) and n-1 secondary network devices (or referred to as coordinated TRPs). In this case, the network device that performs the fourth aspect and the possible implementations of the fourth aspect may be the primary network device or any secondary network device. For another example, in the n different network devices, a primary network device and a secondary network device may not be distinguished. In this case, the network device that performs the fourth aspect and the possible implementations of the fourth aspect may be any one of the n network devices.

In a possible implementation of the fourth aspect, that the CBSR configuration information is used to configure a plurality of CBSRs includes: The CBSR configuration information is used to configure at least one group of CBSRs, where each group of CBSRs include at least two CBSRs, and one group of the at least one group of CBSRs include m CBSRs.

According to the foregoing technical solution, the CBSR configuration information in the first configuration information is used to configure the at least one group of CBSRs, so that before the terminal device determines the PMI, the m CBSRs included in the group of CBSRs determined by the terminal device in the at least one group of CBSRs are used as one of bases for determining the PMI. In other words, the CBSR configuration information in the first configuration information is used to configure the CBSR in a configuration manner in which the "group" is used as a granularity, so that after determining a group of CBSRs based on a pre-configured selection mechanism, the terminal device uses m CBSRs included in the group of CBSRs as one of bases for determining the PMI.

Optionally, when the at least one group of CBSRs configured by using the CBSR configuration information include a plurality of groups of CBSRs, different groups of CBSRs may correspond to different measurement assumptions.

For example, the n CSI-RSs respectively correspond to the n different network devices, and any two or more of the n different network devices may form a coordination set that provides a communication service. Each coordination set may be referred to as a measurement assumption, that is, the n CSI-RSs correspond to a plurality of measurement assumptions, and one of the plurality of measurement assumptions corresponds to the m CSI-RSs, so that the measurement assumption can determine the m CSI-RSs corresponding to the PMI. In addition, in this implementation, the CBSR configuration information is used to configure a plurality of groups of pieces of CBSR information, where the plurality of groups of pieces of CBSR information are in one-to-one correspondence with the plurality of measurement assumptions, and one group of the plurality of groups of pieces of CBSR information include the m pieces of CBSR information. In other words, the CBSR configuration information in the first configuration information is used to configure the CBSR in a configuration manner in which the "measurement assumption" is used as a granularity.

In a possible implementation of the fourth aspect, that the CBSR configuration information is used to configure a plurality of CBSRs includes: The CBSR configuration information is used to configure n CBSRs, where the n CBSRs include m CBSRs.

According to the foregoing technical solution, the CBSR configuration information in the first configuration information is used to configure the n CBSRs, so that before the terminal device determines the PMI, the terminal device uses the m CBSRs included in the n CBSRs as one of bases for determining the PMI. In other words, the CBSR configuration information in the first configuration information is used to configure the CBSR in a configuration manner in which the "CSI-RS" is used as a granularity, so that the terminal device can use the m CBSRs included in the n CBSRs as one of the bases for determining the PMI.

In a possible implementation of the fourth aspect, one piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource.

According to the foregoing technical solution, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, the n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

In a possible implementation of the fourth aspect, the PMI is included in channel state information CSI, and the CSI further includes at least one of the following: indexes of CSI-RS port sets corresponding to the m CSI-RSs; or indexes of the m CSI-RSs.

According to the foregoing technical solution, after the terminal device receives the n CSI-RSs, the PMI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the PMI.

A fifth aspect of this application provides a communication apparatus. The apparatus may implement the method in any one of the first aspect or the possible implementations of the first aspect. The apparatus includes a corresponding unit or module configured to perform the foregoing method. The unit or the module included in the apparatus may be implemented by using software and/or hardware. For example, the apparatus may be a terminal device, the apparatus may be a component (for example, a processor, a chip, or a chip system) in the terminal device, or the apparatus may be a logic module or software that can implement all or some functions of the terminal device.

The apparatus includes a transceiver unit and a processing unit.

The transceiver unit is configured to receive first configuration information, where the first configuration information includes configuration information of n channel state information reference signals CSI-RSs, and n is an integer greater than 1.

The transceiver unit is further configured to receive the n CSI-RSs based on the first configuration information.

The processing unit is configured to determine a channel quality indicator CQI based on m CSI-RSs and a mapping relationship, where the CQI indicates channel quality of a physical downlink shared channel PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

The transceiver unit is further configured to send the CQI.

In a possible implementation of the fifth aspect, the processing unit is further configured to determine the m CSI-RSs from the n CSI-RSs.

In a possible implementation of the fifth aspect, the processing unit is specifically configured to determine the m CSI-RSs based on a first parameter and the n CSI-RSs, where the first parameter includes a value of m or a first threshold.

In a possible implementation of the fifth aspect, the n CSI-RSs correspond to a plurality of measurement assumptions, and the measurement assumption is used to determine the m CSI-RSs corresponding to the CQI.

In a possible implementation of the fifth aspect, the transceiver unit is further configured to receive first indication information, where the first indication information indicates at least one of the plurality of measurement assumptions.

One measurement assumption is determined from the at least one measurement assumption, where the measurement assumption corresponds to the m CSI-RSs.

In a possible implementation of the fifth aspect, the transceiver unit is further configured to receive second indication information, where the second indication information indicates a power offset corresponding to each CSI-RS in the at least one of the plurality of measurement assumptions.

The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS. The processing unit is specifically configured to determine the CQI based on the second indication information, the m CSI-RSs, and the mapping relationship.

In a possible implementation of the fifth aspect, the transceiver unit is further configured to receive second indication information, where the second indication information indicates a power offset corresponding to each of the n CSI-RSs. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS. The processing unit is specifically configured to determine the CQI based on the second indication information, the m CSI-RSs, and the mapping relationship.

In a possible implementation of the fifth aspect, the power offset that corresponds to each CSI-RS and that is indicated by the second indication information is the same.

In a possible implementation of the fifth aspect, each piece of configuration information in the configuration information of the n CSI-RSs indicates one CSI-RS port set.

The CSI-RS port set includes one CSI-RS resource, and n CSI-RS resources belong to a same CSI-RS resource set; or
the CSI-RS port set includes at least one port, and ports included in n CSI-RS port sets belong to a same CSI-RS resource.

In a possible implementation of the fifth aspect, the CQI is included in CSI, and the CSI further includes at least one of the following:

indexes of CSI-RS port sets corresponding to the m CSI-RSs;
indexes of the m CSI-RSs; or
a PMI, where the PMI indicates precoding matrices corresponding to CSI-RS port sets corresponding to the m CSI-RSs.

In a possible implementation of the fifth aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=n-1}^{(3000)}(i) \\ \cdots \\ y_{j=n-1}^{(3000+P_{n-1}-1)}(i) \end{bmatrix} = \begin{bmatrix} W_0(i) \\ \vdots \\ W_{n-1}(i) \end{bmatrix} \begin{bmatrix} x^{(0)}(i) \\ \cdots \\ x^{(v-1)}(i) \end{bmatrix}$$

$x^{(k)}(i)$, where k = 0, 1, ..., or v-1, represents a $k^{th}$ data stream of a PDSCH on an $i^{th}$ orthogonal frequency division multiplexing OFDM symbol; $y_j^{(p)}(i)$, where j=0, 1, ..., or n-1, and p=3000, ..., or 3000 + $P_{n-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

In a possible implementation of the fifth aspect, in $W_0(i)$, ..., and $W_{n-1}(i)$, a quantity of non-zero matrices is m.

Optionally, for the $j^{th}$ CSI-RS in the n CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where k = 0, 1, ..., or v-1, represents the $k^{th}$ data stream of the PDSCH on the $i^{th}$ orthogonal frequency division multiplexing OFDM symbol; $y_j^{(p)}(i)$, where j=0, 1, ..., or n-1, and p=3000, ..., or 3000 + $P_{n-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

In a possible implementation of the fifth aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix}$$

$x^{(k)}(i)$, where k = 0, 1, ..., or v-1, represents a $k^{th}$ data stream of a PDSCH on an $i^{th}$ orthogonal frequency division multiplexing OFDM symbol; $y_j^{(p)}(i)$, where j=0, 1, ..., or m-1, and p=3000, ..., or 3000 + $P_{m-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

Optionally, for the $j^{th}$ CSI-RS in the m CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where k = 0, 1, ..., or v-1, represents the $k^{th}$ data stream of the PDSCH on the $i^{th}$ orthogonal frequency division multiplexing OFDM symbol; $y_j^{(p)}(i)$, where j=0, 1, ..., or m-1, and p=3000, ..., or 3000 + $P_{m-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

In the fifth aspect of embodiments of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus may implement the method in any one of the second aspect or the possible implementations of the second aspect. The apparatus includes a corresponding unit or module configured to perform the foregoing method. The unit or the module included in the apparatus may be implemented by using software and/or hardware. For example, the apparatus may be a network device, the apparatus may be a component (for example, a processor, a chip, or a chip system) in the network device, or the apparatus may be a logic module or software that can implement all or some functions of the network device.

The apparatus includes a transceiver unit and a processing unit.

The processing unit is configured to determine first configuration information, where the first configuration information includes configuration information of n channel state information reference signals CSI-RSs, and n is an integer greater than 1.

The transceiver unit is configured to send one of the n CSI-RSs based on the first configuration information.

The transceiver unit is further configured to receive a channel quality indicator CQI, where the CQI is determined based on m CSI-RSs and a mapping relationship. The CQI indicates channel quality of a physical downlink shared channel PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

In a possible implementation of the sixth aspect, the n CSI-RSs correspond to a plurality of measurement assumptions, and the measurement assumption is used to determine the m CSI-RSs corresponding to the CQI.

In a possible implementation of the sixth aspect, the transceiver unit is further configured to send first indication information, where the first indication information indicates at least one of the plurality of measurement assumptions.

One of the at least one measurement assumption corresponds to the m CSI-RSs.

In a possible implementation of the sixth aspect, the transceiver unit is further configured to send second indication information, where the second indication information indicates a power offset corresponding to each CSI-RS in the at least one of the plurality of measurement assumptions.

The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

In a possible implementation of the sixth aspect, the transceiver unit is further configured to send second indication information, where the second indication information indicates a power offset corresponding to each of the n CSI-RSs.

The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

In a possible implementation of the sixth aspect, the power offset that corresponds to each CSI-RS and that is indicated by the second indication information is the same.

In a possible implementation of the sixth aspect, each piece of configuration information in the configuration information of the n CSI-RSs indicates one CSI-RS port set.

The CSI-RS port set includes one CSI-RS resource, and n CSI-RS resources belong to a same CSI-RS resource set; or
the CSI-RS port set includes at least one port, and ports included in n CSI-RS port sets belong to a same CSI-RS resource.

In a possible implementation of the sixth aspect, the CQI is included in CSI, and the CSI further includes at least one of the following:

indexes of CSI-RS port sets corresponding to the m CSI-RSs;
indexes of the m CSI-RSs; or
a PMI, where the PMI indicates precoding matrices of CSI-RS port sets corresponding to the m CSI-RSs.

In a possible implementation of the sixth aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=n-1}^{(3000)}(i) \\ \cdots \\ y_{j=n-1}^{(3000+P_{n-1}-1)}(i) \end{bmatrix} = \begin{bmatrix} W_0(i) \\ \vdots \\ W_{n-1}(i) \end{bmatrix} \begin{bmatrix} x^{(0)}(i) \\ \cdots \\ x^{(v-1)}(i) \end{bmatrix}$$

$x^{(k)}(i)$, where k = 0, 1, ..., or v-1, represents a $k^{th}$ data stream of a PDSCH on an $i^{th}$ orthogonal frequency division multiplexing OFDM symbol; $y_j^{(p)}(i)$, where j=0, 1, ..., or n-1, and p=3000, ..., or $3000 + P_{n-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

In a possible implementation of the sixth aspect, in $W_0(i)$, ..., and $W_{n-1}(i)$, a quantity of non-zero matrices is m.

Optionally, for the $j^{th}$ CSI-RS in the n CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}(i)$, where k = 0, 1, ..., or v-1, represents the $k^{th}$ data stream of the PDSCH on the $i^{th}$ orthogonal frequency division multiplexing OFDM symbol; $y_j^{(p)}(i)$, where j=0, 1, ..., or n-1, and p=3000, ..., or $3000 + P_{n-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

In a possible implementation of the sixth aspect, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix}$$

$x^{(k)}(i)$, where k = 0, 1, ..., or v-1, represents a $k^{th}$ data stream of a PDSCH on an $i^{th}$ orthogonal frequency division multiplexing OFDM symbol; $y_j^{(p)}(i)$, where j=0, 1, ..., or m-1, and p=3000, ..., or $3000 + P_{m-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

Optionally, for the $j^{th}$ CSI-RS in the m CSI-RSs, where j=0, ..., or j=n-1, a mapping relationship thereof satisfies:

$$\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}$$

$x^{(k)}$ (i), where k = 0, 1, ..., or v-1, represents the $k^{th}$ data stream of the PDSCH on the $i^{th}$ orthogonal frequency division multiplexing OFDM symbol; $y_j^{(p)}(i)$ , where j=0, 1, ..., or m-1, and p=3000, ..., or 3000 + $P_{m-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

In the sixth aspect of embodiments of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus may implement the method in any one of the third aspect or the possible implementations of the third aspect. The apparatus includes a corresponding unit or module configured to perform the foregoing method. The unit or the module included in the apparatus may be implemented by using software and/or hardware. For example, the apparatus may be a terminal device, the apparatus may be a component (for example, a processor, a chip, or a chip system) in the terminal device, or the apparatus may be a logic module or software that can implement all or some functions of the terminal device.

The apparatus includes a processing unit and a transceiver unit.

The transceiver unit is configured to receive first configuration information, where the first configuration information includes configuration information of n CSI-RSs and CBSR configuration information corresponding to the n CSI-RSs, the CBSR configuration information is used to configure a plurality of CBSRs, and n is an integer greater than 1.

The transceiver unit is further configured to receive the n CSI-RSs based on the first configuration information.

The processing unit is configured to determine a PMI based on m CSI-RSs and m of the plurality of CBSRs, where the m CSI-RSs are included in the n CSI-RSs, m is an integer greater than 1, m is less than or equal to n, and the m CSI-RSs are in one-to-one correspondence with m pieces of CBSR information.

The PMI is sent.

In a possible implementation of the seventh aspect, that the CBSR configuration information is used to configure a plurality of CBSRs includes: The CBSR configuration information is used to configure at least one group of CBSRs, where each group of CBSRs include at least two CBSRs.

Before the determining a PMI based on m CSI-RSs and m of the plurality of CBSRs, the apparatus further includes:

determining one group of CBSRs from the at least one group of CBSRs, where the group of CBSRs include the m CBSRs.

In a possible implementation of the seventh aspect, that the CBSR configuration information is used to configure a plurality of CBSRs includes: The CBSR configuration information is used to configure n CBSRs.

Before the determining a PMI based on m CSI-RSs and m of the plurality of CBSRs, the apparatus further includes:

determining the m CBSRs from the n CBSRs.

In the seventh aspect of embodiments of this application, a composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus may implement the method in any one of the fourth aspect or the possible implementations of the fourth aspect. The apparatus includes a corresponding unit or module configured to perform the foregoing method. The unit or the module included in the apparatus may be implemented by using software and/or hardware. For example, the apparatus may be a network device, the apparatus may be a component (for example, a processor, a chip, or a chip system) in the network device, or the apparatus may be a logic module or software that can implement all or some functions of the network device.

The apparatus includes a processing unit and a transceiver unit.

The processing unit is configured to determine first configuration information, where the first configuration information includes configuration information of n CSI-RSs and CBSR configuration information corresponding to the n CSI-RSs, the CBSR configuration information is used to configure a plurality of CBSRs, and n is an integer greater than 1.

The transceiver unit is configured to send one of the n CSI-RSs based on the first configuration information.

The transceiver unit is further configured to receive a PMI, where the PMI corresponds to m CSI-RSs, the m CSI-RSs are included in the n CSI-RSs, m is an integer greater than 1, m is less than or equal to n, and the m CSI-RSs are in one-to-one correspondence with m pieces of CBSR information configured by using the CBSR configuration information.

In a possible implementation of the eighth aspect, that the CBSR configuration information is used to configure a plurality of CBSRs includes: The CBSR configuration information is used to configure at least one group of CBSRs, where each group of CBSRs include at least two CBSRs.

One group of the at least one group of CBSRs include m CBSRs.

In a possible implementation of the eighth aspect, that the CBSR configuration information is used to configure a plurality of CBSRs includes: The CBSR configuration information is used to configure n CBSRs.

The n CBSRs include m CBSRs.

In the eighth aspect of embodiments of this application, a composition module of the communication apparatus may be further configured to: perform the steps performed in the possible implementations of the fourth aspect, and achieve corresponding technical effects. For details, refer to the fourth aspect. Details are not described herein again.

A ninth aspect of embodiments of this application provides a communication apparatus, including at least one processor, where the at least one processor is coupled to a memory.

The memory is configured to store a program or instructions.

The at least one processor is configured to execute the program or the instructions, to enable the apparatus to implement the method according to any one of the first aspect or the possible implementations of the first aspect, to enable the apparatus to implement the method according to any one of the second aspect or the possible implementations of the second aspect, to enable the apparatus to implement the method according to any one of the third aspect or the possible implementations of the third aspect, or to enable the apparatus to implement the method according to any one of the fourth aspect or the possible implementations of the fourth aspect.

A tenth aspect of embodiments of this application provides a communication apparatus, including at least one logic circuit and an input/output interface.

The input/output interface is configured to input first configuration information and n CSI-RSs.

The input/output interface is configured to output channel state information CSI, where the CSI includes a channel quality indicator CQI.

The logic circuit is configured to perform the method according to any one of the first aspect or the possible implementations of the first aspect.

An eleventh aspect of embodiments of this application provides a communication apparatus, including at least one logic circuit and an input/output interface.

The input/output interface is configured to output one of n CSI-RSs.

The input/output interface is configured to input channel state information CSI, where the CSI includes a channel quality indicator CQI.

The logic circuit is configured to perform the method according to any one of the second aspect or the possible implementations of the second aspect.

A twelfth aspect of embodiments of this application provides a communication apparatus, including at least one logic circuit and an input/output interface.

The input/output interface is configured to input first configuration information and n CSI-RSs.

The input/output interface is configured to output channel state information CSI, where the CSI includes a PMI.

The logic circuit is configured to perform the method according to any one of the third aspect or the possible implementations of the third aspect.

A thirteenth aspect of embodiments of this application provides a communication apparatus, including at least one logic circuit and an input/output interface.

The input/output interface is configured to output one of n CSI-RSs.

The input/output interface is configured to input channel state information CSI, where the CSI includes a PMI.

The logic circuit is configured to perform the method according to any one of the fourth aspect or the possible implementations of the fourth aspect.

A fourteenth aspect of embodiments of this application provides a computer-readable storage medium. The computer-readable storage medium is configured to store one or more computer-executable instructions. When the computer-executable instructions are executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, or the processor performs the method according to any one of the fourth aspect or the possible implementations of the fourth aspect.

A fifteenth aspect of embodiments of this application provides a computer program product (or referred to as a computer program). When the computer program product is executed by a processor, the processor performs the method according to any one of the first aspect or the possible implementations of the first aspect, the processor performs the method according to any one of the second aspect or the possible implementations of the second aspect, the processor performs the method according to any one of the third aspect or the possible implementations of the third aspect, or the processor performs the method according to any one of the fourth aspect or the possible implementations of the fourth aspect.

A sixteenth aspect of embodiments of this application provides a chip system. The chip system includes at least one processor, configured to support a communication apparatus in implementing a function in any one of the first aspect or the possible implementations of the first aspect, configured to support a communication apparatus in implementing a function in any one of the second aspect or the possible implementations of the second aspect, configured to support a communication apparatus in implementing a function in any one of the third aspect or the possible implementations of the third aspect, or configured to support a communication apparatus in implementing a function in any one of the fourth aspect or the possible implementations of the fourth aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit, and the interface circuit provides the program instructions and/or the data for the at least one processor.

A seventeenth aspect of embodiments of this application provides a communication system. The communication system includes the communication apparatus in the fifth aspect and the communication apparatus in the sixth aspect, the communication system includes the communication apparatus in the seventh aspect and the communication apparatus in the eighth aspect, the communication system includes the communication apparatus in the ninth aspect, the communication system includes the communication apparatus in the tenth aspect and the communication apparatus in the eleventh aspect, and/or the communication system includes the communication apparatus in the twelfth aspect and the communication apparatus in the thirteenth aspect.

For technical effects brought by any design manner of the fifth aspect to the seventeenth aspect, refer to the technical effects brought by different implementations of the first aspect to the fourth aspect. Details are not described herein again.

It should be understood that, for a component in a device, "sending" described above may be referred to as "outputting", and "receiving" may be referred to as "inputting".

It can be learned from the foregoing technical solutions that embodiments of this application include the following beneficial effects:

In some implementations, after a terminal device receives n CSI-RSs based on first configuration information, the terminal device determines a CQI based on m CSI-RSs in the n CSI-RSs and a mapping relationship. The CQI indicates channel quality of a PDSCH, and the mapping relationship used to determine the CQI is a mapping relationship between a data stream of the PDSCH and CSI-RS ports corresponding to the m CSI-RSs, where m is an integer greater than 1, that is, the m CSI-RSs come from different network devices. In other words, in a scenario in which the data stream of the PDSCH comes from different network devices, in a process in which the terminal device determines the CQI, the terminal device considers/assumes (assume) that there is the mapping relationship between the data stream of the PDSCH and CSI-RS ports corresponding to the different network devices, so that the terminal device determines, based on the mapping relationship, a correspondence between the data stream of the PDSCH and the different network devices, and determines and sends the CQI. Therefore, in an application scenario in which the data stream received by the terminal device comes from the different network devices, accuracy of the CQI determined by the terminal device is improved, so that accuracy of the downlink channel quality subsequently obtained by the network device based on the CQI is improved, thereby improving communication efficiency.

In some other implementations, first configuration information received by a terminal device includes configuration information of n CSI-RSs and CBSR configuration information corresponding to the n CSI-RSs, and the CBSR configuration information is used to configure a plurality of CBSRs. Then, after the terminal device receives the n CSI-RSs based on the configuration information of the n CSI-RSs in the first configuration information, the terminal device determines a PMI based on the plurality of CBSRs configured by using the CBSR configuration information in the first configuration information, where m is an integer greater than 1, that is, m CSI-RSs come from different network devices. In other words, both configuration information used by the terminal device to receive CSI-RSs from different network devices and configuration information of CBSRs corresponding to the different network devices are located in the first configuration information. In comparison with an implementation in which the terminal device needs to respectively receive configuration information from the different network devices, to respectively determine the configuration information of the CSI-RSs of the different network devices and the configuration information of the CBSRs corresponding to the different network devices, overheads can be reduced, and communication efficiency can be improved. In addition, the foregoing technical solution may be applied to an application scenario in which a data stream received by the terminal device comes from the different network devices, so that the CBSRs of the different network devices are configured in the scenario. In this way, the terminal device determines that, in the application scenario, the CBSRs corresponding to the different network devices may be obtained based on the first configuration information, and the PMI may be sent based on the CBSR configuration information.

## BRIEF DESCRIPTION OF DRAWINGS

FIG. 1 is a diagram of a communication system according to this application;
FIG. 2 is another diagram of a communication system according to this application;
FIG. 3 is a diagram of a communication method according to this application;
FIG. 4 is another diagram of a communication system according to this application;

FIG. 5 is another diagram of a communication system according to this application;
FIG. 6 is another diagram of a communication method according to this application;
FIG. 7 is a diagram of a communication apparatus according to this application;
FIG. 8 is another diagram of a communication apparatus according to this application; and
FIG. 9 is another diagram of a communication apparatus according to this application.

## DESCRIPTION OF EMBODIMENTS

Some terms in embodiments of this application are first described, to help a person skilled in the art have a better understanding.

(1) A terminal device (or referred to as a terminal, a user, a user terminal, an end user, user equipment, or the like) may be a wireless terminal device that can communicate with a network device. The wireless terminal device may be a device that provides a user with voice and/or data, a handheld device with a wireless connection function, or another processing device connected to a wireless modem.

The terminal may communicate with one or more core networks or the Internet via a radio access network (radio access network, RAN). The terminal may be a mobile terminal device, for example, a mobile telephone (or referred to as a "cellular" phone or a mobile phone (mobile phone)), a computer, or a data card. For example, the terminal may be a portable, pocket-sized, handheld, computer built-in, or vehicle-mounted mobile apparatus. For example, the terminal may be a device like a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a pad (Pad), or a computer with a wireless transceiver function. The terminal may also be referred to as a system, a subscriber unit (subscriber unit), a subscriber station (subscriber station), a mobile station (mobile station), a mobile station (mobile station, MS), a remote station (remote station), an access point (access point, AP), a remote terminal (remote terminal), an access terminal (access terminal), a user terminal (user terminal), a user agent (user agent), customer premises equipment (customer premises equipment, CPE), a terminal (terminal), user equipment (user equipment, UE), a mobile terminal (mobile terminal, MT), or the like. Alternatively, the terminal device may be a wearable device and a next-generation communication system, for example, a terminal device in a 5th generation (5th generation, 5G) communication system or a terminal device in a future evolved network.
In addition, the terminal in this application may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a pad, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.
(2) A network device may be a device in a wireless network. For example, the network device may be a radio access network (radio access network, RAN) node (or device) that connects the terminal device to the wireless network, may be referred to as a radio access network device, and may also be generally referred to as a base station. Currently, some examples of the RAN device are: a next-generation NodeB (generation NodeB, gNodeB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node and/or a distributed unit (distributed unit, DU) node.
In addition, the network device may further include a core network device. The core network device includes, for example, an access and mobility management function (access and mobility management function, AMF), a user plane function (user plane function, UPF), or a session management function (session management function, SMF).
It may be understood that the network device may alternatively be another apparatus that provides a wireless communication function for the terminal device. A specific technology and a specific device form that are used by the network device are not limited in embodiments of this application.
In this application, an apparatus configured to implement a function of the network device may be a network device, or may be an apparatus, for example, a chip system, that can support the network device in implementing the function.

(3) Coordinated multiple points transmission/reception mechanism: In downlink transmission, the terminal device may simultaneously communicate with at least one network device, that is, simultaneously receive data of a plurality of network devices. This transmission mode is referred to as coordinated multiple points transmission/reception (coordinated multiple points transmission/reception, CoMP). The at least one network device forms a coordination set to simultaneously communicate with the terminal device. The network devices in the coordination set may be respectively connected to different control nodes, and the control nodes may exchange information with each other, for example, exchange scheduling policy information to implement coordinated transmission. Alternatively, the network devices in the coordination set are all connected to a same control node. The control node receives channel state information (for example, CSI or RSRP) that is reported by the terminal device and that is collected by the network devices in the coordination set, performs unified scheduling on terminal devices in the coordination set based on channel state information of all terminal devices in the coordination set, and then exchanges a scheduling policy with the network devices connected to the control node. Then, the network devices respectively notify terminal devices by using downlink control information (downlink control information, DCI) signaling carried on a physical downlink control channel (physical downlink control channel, PDCCH). According to a transmission policy of a plurality of network devices in the coordination set for a terminal device, the CoMP transmission mode may include:

Dynamic point switching (dynamic point switching, DPS): For a dynamic change of a network device that transmits data to a terminal device, a network device with a good channel condition is selected as much as possible to perform data scheduling on the current terminal device, that is, a plurality of network devices transmit data to a terminal device in a time division manner.

Non-coherent transmission (non-coherent joint transmission, NCJT): A plurality of network devices simultaneously transmit data to a terminal device, and antennas of the plurality of network devices respectively send independent data streams to the terminal device after performing independent precoding. To be specific, each network device independently selects an optimal precoding matrix to perform joint phase and amplitude weighting between antennas of the network device. In this mechanism, phase calibration does not need to be performed on the antennas of the plurality of network devices. It is assumed that a TRP 1 and a TRP 2 perform joint transmission, where each has M transmit antennas, and each transmits N streams of data. In this case, a precoding matrix for the joint transmission is:

$$\begin{bmatrix} B1 & 0 \\ 0 & B2 \end{bmatrix}$$

. The first M rows of the matrix correspond to the transmit antennas of the TRP 1, the last M rows correspond to the transmit antennas of the TRP 2, and dimensions of B1 and B2 are both M*N.

Coherent transmission (coherent joint transmission, CJT): A plurality of network devices simultaneously transmit data to a terminal device, and antennas of the plurality of network devices simultaneously send a same data stream to the terminal device after performing joint precoding. To be specific, the plurality of network devices jointly select an optimal precoding matrix to perform joint phase and amplitude weighting between the antennas of the plurality of network devices. In this mechanism, phase calibration needs to be performed on the antennas of the plurality of network devices. It is assumed that a TRP 1 and a TRP 2 perform joint transmission, where each has M transmit antennas, and each transmits N streams of data. In this case, a precoding matrix for the joint transmission is: $\begin{bmatrix} B1 & B2 \\ B3 & B4 \end{bmatrix}$. The first M rows of the matrix correspond to the transmit antennas of the TRP 1, the last M rows correspond to the transmit antennas of the TRP 2, and dimensions of B1, B2, B3, and B4 are all M*N.

In an example of a CRAN architecture, there is a serving network device, for example, a serving base station (serving TRP)/serving cell (serving cell), in network devices in a coordination set. A function of the serving base station is to make a scheduling decision on data communication for the terminal device, and communicate with the terminal device at a MAC layer and a physical layer, for example, determine time-frequency resources of a control channel (PDCCH) and a data channel (PUSCH/PDSCH) of the terminal device based on the scheduling decision, send DCI signaling on the PDCCH, and send data, a reference signal (reference signal, RS), and the like on the PUSCH/PDSCH. A network device other than the serving base station in the coordination set is referred to as a coordinated base station (coordinated TRP)/coordinated cell (coordinated TRP). A function of the coordinated base station is to communication with the terminal device at a physical layer according to the scheduling decision of the serving base station, for example, according to the scheduling decision of the serving base station, send DCI signaling on the PDCCH, and send data, an RS, and the like on the PUSCH/PDSCH. For example, the serving base station is the TRP 1, the coordinated base station is the TRP 2, and the TRP 1 is used as the serving base station to make a scheduling decision for the terminal device and send DCI. The DCI may indicate to schedule the TRP 1/TRP 2 to perform data transmission. In other words, the DCI carries scheduling information of the two TRPs.

(4) An antenna port may be referred to as a port for short. It may be understood as a transmit antenna identified by a receiving device, or a transmit antenna that can be distinguished in space. One antenna port may be pre-configured for each virtual antenna, each virtual antenna may be a weighted combination of a plurality of physical antennas, and each antenna port may correspond to one reference signal. Therefore, each antenna port may be referred to as a port of one reference signal, for example, a CSI-RS port, a sounding reference signal (sounding reference signal, SRS) port, or the like.

For example, in a new radio (new radio, NR) system, the CSI-RS port may be in one-to-one correspondence or many-to-one correspondence with a transmit antenna of a base station. Different CSI-RS ports occupy orthogonal resources, and an orthogonal manner may be time division, frequency division, or code division. A DMRS port is in one-to-one correspondence with a data transport stream, and each DMRS port is a demodulation reference signal of a corresponding transport stream.

(5) A channel state information (CSI) report (report) is information that is used to describe a channel attribute of a communication link and that is reported by a receive end (for example, the terminal device) to a transmit end (for example, the network device) in a wireless communication system. The CSI report may include, for example, but is not limited to, a precoding matrix indicator (PMI), a rank indicator (RI), a channel quality indicator (CQI), a channel state information reference signal (channel state information reference signal, CSI-RS), a CSI-RS resource indicator (CSI-RS resource indicator, CRI), and a layer indicator (layer indicator, LI).

It should be understood that the foregoing enumerated specific content of the CSI is merely an example for description, and shall not constitute any limitation on this application. The CSI may include one or more of the foregoing enumerated information, or may include information other than the foregoing enumerated information representing the CSI. This is not limited in this application.

(6) The precoding matrix indicator (PMI) may indicate a precoding matrix. The precoding matrix may be, for example, a precoding matrix determined by the terminal device based on a channel matrix of one frequency-domain unit. The channel matrix may be determined by the terminal device in a manner like channel estimation or based on channel reciprocity. However, it should be understood that a specific method for determining the precoding matrix by the terminal device is not limited to the foregoing descriptions. For a specific implementation, refer to a conventional technology. For brevity, details are not enumerated one by one herein again. Usually, a row of the precoding matrix is in one-to-one correspondence with the CSI-RS port, and a column of the precoding matrix is in one-to-one correspondence with the corresponding data transport stream.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on a covariance matrix of the channel matrix. It should be understood that the foregoing enumerated manners of determining the precoding matrix are merely examples, and shall not constitute any limitation on this application. For a manner of determining the precoding matrix, refer to a conventional technology. For brevity, details are not enumerated one by one herein again.

(7) Configuration and pre-configuration: Both configuration and pre-configuration are used in this application. The configuration means that the base station/server sends configuration information of some parameters or values of the parameters to the terminal by using a message or signaling, so that the terminal determines, based on the values or the information, a parameter for communication or a resource for transmission. For example, a CSI-RS resource may be configured by using RRC signaling, including a port included in the CSI-RS resource, an occupied time-frequency resource, and the like. The pre-configuration is similar to the configuration, and may mean that the base station/server pre-negotiates parameter information or a parameter value with the terminal device, may mean that parameter information or a parameter value used by the base station/server or the terminal device is stipulated in a standard protocol, or may mean that parameter information or a parameter value is pre-stored in the base station/server or the terminal device. This is not limited in this application. Further, the values and parameters may be changed or updated.

(8) In this application, "indicating" may include direct indicating and indirect indicating. When a description is that a piece of indication information indicates A, it may be understood as that the indication information carries A, directly indicates A, or indirectly indicates A.

In this application, information indicated by indication information is referred to as to-be-indicated information. In a specific implementation process, there are many manners of indicating the to-be-indicated information, for example, but not limited to the following: The to-be-indicated information may be directly indicated. For example, the to-be-indicated information itself or an index of the to-be-indicated information may be indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that is pre-agreed on (for example, stipulated in a protocol), to reduce indication overheads to some extent.

The to-be-indicated information may be sent together as a whole, or may be divided into a plurality of pieces of sub-information for separate sending. In addition, sending periodicities and/or sending occasions of these pieces of sub-information may be the same or different. A specific sending method is not limited in this application. The sending periodicities and/or sending occasions of these pieces of sub-information may be predefined, for example, predefined according to a protocol, or may be configured by a transmit end device by sending configuration information to a receive end device. The configuration information may include, for example, but is not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

(9) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, A and B, A and C, B and C, or A, B, and C. In addition, unless otherwise specified, ordinal numbers such as "first" and "second" in embodiments of this application are used to distinguish between a plurality of objects, and are not used to limit sequences, time sequences, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active state (ACTIVE), or may be applied to a terminal device in a non-connected state (INACTIVE) or an idle state (IDLE).

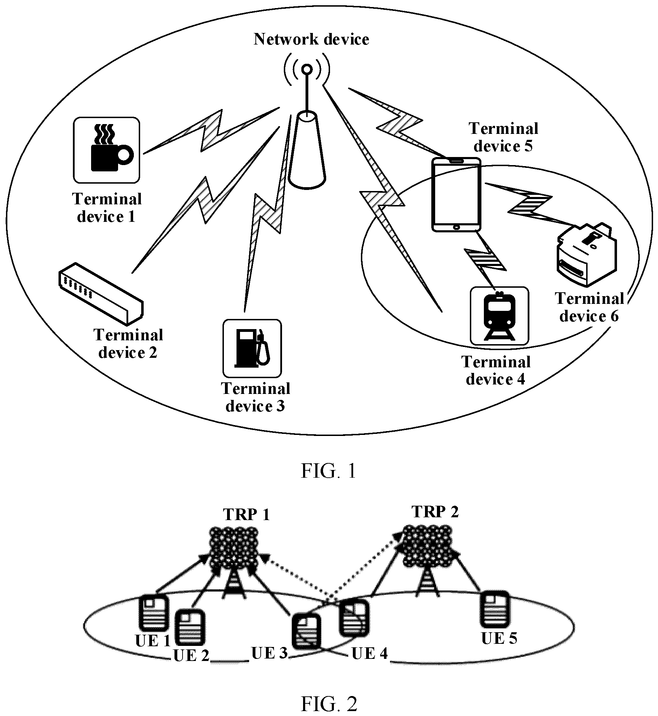

FIG. 1 is a diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, and a terminal device 6. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description. A transmit end may be the network device or the terminal device, and a receive end may be the network device or the terminal device.

As shown in FIG. 1, a process of receiving and sending configuration information is used as an example. A configuration information sending entity may be the network device. An example in which the network device is a base station (Base Station) and each terminal device is UE is used for description. Configuration information receiving entities may be the terminal device 1 to the terminal device 6. In this case, the base station and the terminal device 1 to the terminal device 6 form a communication system. In the communication system, the terminal device 1 to the terminal device 6 may send uplink data to the network device, and the network device needs to receive the uplink data sent by the terminal device 1 to the terminal device 6. In addition, the network device may send the configuration information to the terminal device 1 to the terminal device 6.

In addition, in FIG. 1, the terminal device 4 to the terminal device 6 may also form a communication system. In this case, both a configuration information sending entity and a configuration information receiving entity may be the terminal devices. The terminal device 5 is used as a network device, that is, the configuration information sending entity. The terminal device 4 and the terminal device 6 are used as terminal devices, that is, the configuration information receiving entities. For example, in an internet of vehicles system, the terminal device 5 separately sends configuration information to the terminal device 4 and the terminal device 6, and receives uplink data sent by the terminal device 4 and the terminal device 6. Correspondingly, the terminal device 4 and the terminal device 6 receive the configuration information sent by the terminal device 5, and send the uplink data to the terminal device 5.

FIG. 2 is another diagram of a communication system according to this application. As shown in FIG. 2, an example in which network devices include a TRP 1 and a TRP 2, and terminal devices include UE 1 to UE 5 is used for description. The TRP 1, the TRP 2, and the UE 1 to the UE 5 may form a communication system. In the communication system, the UE 1 to the UE 5 may send uplink data, and the uplink data sent by the UE 1 to the UE 5 may be received by one of the TRPs (the uplink data sent by the UE 1 and the UE 2 as shown in FIG. 2 is received by the TRP 1, and the uplink data sent by the UE 5 as shown in FIG. 2 is received by the TRP 2), or may be jointly received by the two TRPs (the uplink data sent by the UE 3 as shown in FIG. 2 is received by the TRP 1 and the TRP 2, and the uplink data sent by the UE 4 as shown in FIG. 2 is received by the TRP 1 and the TRP 2). In addition, the network device (the TRP 1 and the TRP 2 as shown in FIG. 2) may send downlink information to the terminal device (the UE 1 to the UE 5 as shown in FIG. 2).

Optionally, in this application, in the example shown in FIG. 2, a communication scenario in which UE (the UE 1 and the UE 2 as shown in FIG. 2) connected to the TRP 1 but not connected to the TRP 2 is, and a communication scenario in which UE (the UE 5 as shown in FIG. 2) connected to the TRP 2 but not connected to the TRP 1 is may be referred to as single-station communication scenarios.

Optionally, in this application, in the example shown in FIG. 2, a communication scenario in which UE (for example, the UE 3 and the UE 4 as shown in FIG. 2) connected to the TRP 1 and connected to the TRP 2 is may be referred to as a multi-station communication scenario, or referred to as a multi-transmission reception point (Multi-TRP) coordinated transmission scenario.

Further, optionally, a communication process of the UE 3 in FIG. 2 is used as an example. There may be a plurality of communication modes between the UE 3 and a plurality of TRPs (that is, the TRP 1 and the TRP 2). In a communication mode, the TRP 1 and the TRP 2 respectively transmit independent data streams to the UE 3, in other words, a data stream received by the UE 3 comes from the TRP 1 or the TRP 2. The communication mode may also be referred to as non-coherent joint transmission (NCJT). In another communication mode, the TRP 1 and the TRP 2 jointly transmit a data stream of the UE 3, in other words, a data stream received by the UE 3 comes from the TRP 1 and the TRP 2. The communication mode may also be referred to as coherent joint transmission (CJT).

In the communication system, for example, the communication system shown in FIG. 1 or FIG. 2, the network device may determine downlink channel quality information based on channel state information (channel state information, CSI) sent by the terminal device. The CSI includes a channel quality indicator (channel quality indicator, CQI), a precoding matrix indicator (precoding matrix indicator, PMI), and the like. The CQI is used as an example. The network device may further determine a code rate, a modulation and coding scheme (modulation and coding scheme, MCS), spectral efficiency, or the like based on the CQI.

Currently, after receiving a channel state information reference signal (channel state information reference signal, CSI-RS), in a process in which the terminal device measures a CQI of a downlink channel, the terminal device needs to determine a mapping relationship between a data stream transmitted on the downlink channel and a CSI-RS port of the network device. A single-station communication scenario is used as an example. After receiving a CSI-RS from a network device, the terminal device may perform CQI measurement based on a mapping relationship between a data stream transmitted on a downlink channel and a CSI-RS port of the network device, to obtain a CQI and report the CQI to the network device.

Optionally, after the terminal device receives the CSI-RS, the terminal device may obtain an intermediate quantity based on the CSI-RS and the mapping relationship, and further determine, based on the intermediate quantity, a CQI that needs to be reported. The intermediate quantity may include a signal to interference plus noise ratio (signal to interference noise ratio, SINR), a signal to leakage plus noise ratio (signal to leakage plus noise ratio, SLNR), a signal to noise ratio (signal to noise ratio, SNR), or another parameter. This is not limited herein.

For example, an example in which the intermediate quantity is the SINR is used for description herein. An association relationship between an SINR value and a CQI value may be determined in the following method: In a specific condition, one CQI value is selected each time, and the SINR value is adjusted based on a corresponding modulation scheme and a corresponding code rate, so that a block error rate (block error rate, BLER) is 10%. In this case, the SINR value corresponds to the selected CQI value. Because there is usually a specific offset between downlink data transmit power and CSI-RS power, SINR calculation needs to be performed by comprehensively considering strength of a known reference signal received by the terminal device, a power control offset (power control offset, denoted as a Pc ratio), strength of a received interference signal, and strength of a received noise signal. The SINR satisfies:

$$\text{SINR} = \frac{P_{PDSCH}}{P_{interference}+P_{noise}} - \frac{P_{C}*P_{CSI-RS}}{P_{interference}+P_{noise}} \quad (1)$$

$P_{PDSCH}$ represents PDSCH data transmit power, $P_{CSI-RS}$ represents CSI-RS reference signal power, and $P_{interference}$ and $P_{noise}$ respectively represent interference signal power and noise signal power measured by the terminal device. $P_{C}$ represents an offset between the downlink PDSCH data transmit power and the CSI-RS reference signal power, and one Pc ratio is usually configured in each NZP (Non-Zero Power) CSI-RS resource for CQI measurement.

For example, that the terminal device and the network device are in an NR system is used as an example herein. In NR, the terminal device determines the CQI value based on a CQI quantization table and a preset relationship between the SINR and the CQI. The following describes examples of the CQI quantization table according to implementations of Table 1 to Table 3.

**Table 1**

| CQI index | Modulation order | Code rate x 1024 | Transmission efficiency |
|-----------|------------------|------------------|-------------------------|
| 0 | - | | |

(continued)

| CQI index | Modulation order | Code rate x 1024 | Transmission efficiency |
|---|---|---|---|
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

**Table 2**

| CQI index | Modulation order | Code rate x 1024 | Transmission efficiency |
|---|---|---|---|
| 0 | Out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

**Table 3**

| CQI index | Modulation order | Code rate x 1024 | Transmission efficiency |
|---|---|---|---|
| 0 | Out of range | | |
| 1 | QPSK | 30 | 0.0586 |
| 2 | QPSK | 50 | 0.0977 |

(continued)

| CQI index | Modulation order | Code rate x 1024 | Transmission efficiency |
|---|---|---|---|
| 3 | QPSK | 78 | 0.1523 |
| 4 | QPSK | 120 | 0.2344 |
| 5 | QPSK | 193 | 0.3770 |
| 6 | QPSK | 308 | 0.6016 |
| 7 | QPSK | 449 | 0.8770 |
| 8 | QPSK | 602 | 1.1758 |
| 9 | 16QAM | 378 | 1.4766 |
| 10 | 16QAM | 490 | 1.9141 |
| 11 | 16QAM | 616 | 2.4063 |
| 12 | 64QAM | 466 | 2.7305 |
| 13 | 64QAM | 567 | 3.3223 |
| 14 | 64QAM | 666 | 3.9023 |
| 15 | 64QAM | 772 | 4.5234 |

It should be noted that, in the following descriptions, it is assumed that PDSCH transport streams correspond to a same CQI. In other words, a plurality of PDSCH transport streams need to be comprehensively considered during CQI measurement and feedback. In this application, a case in which a PDSCH transport stream corresponds to a plurality of CQIs is not excluded either. In this case, PDSCH transport streams corresponding to a same CQI feedback are used to determine the CQI value.

In addition, in the NR system, the terminal device needs a channel measurement resource (channel measurement resource, CMR), an interference measurement resource (interference measurement resource, IMR), and a CSI reference resource (CSI reference resource) to determine an RI, the PMI, the CQI, and the like. The CMR is usually a non-zero power CSI-RS, and the IMR may be a non-zero power CSI-RS or a zero power CSI-RS. In addition, the terminal device needs to assume a CSI reference resource for calculating the RI, the PMI, and the CQI. Specifically, the CSI reference resource includes a time-frequency resource occupied by a PDSCH, and a PDSCH transmission mechanism, in other words, a mapping relationship between a CSI-RS port corresponding to the CMR and the PDSCH transport stream.

For example, during CQI calculation, the terminal device assumes (assume) that v-layer PDSCH signals transmitted on PDSCH ports [1000, ..., and 1000+v-1] may be mapped to CSI-RS ports [3000, ..., and 3000+P-1] for equivalent transmission, that is, the foregoing mapping relationship satisfies:

$$\begin{bmatrix} y^{(3000)}(i) \\ \ldots \\ y^{(3000+P-1)}(i) \end{bmatrix} = W(i) \begin{bmatrix} x^{(0)}(i) \\ \ldots \\ x^{(v-1)}(i) \end{bmatrix} \quad (2)$$

W(i) represents a precoding matrix, and a ratio of energy per resource element (energy per resource element, EPRE) of a PDSCH signal mapped to the [3000, ..., and 3000+P-1] port for transmission to EPRE of a CSI-RS is equal to the power control offset (power control offset, denoted as the Pc ratio).

In addition, in a scenario (for example, the scenario may include a communication scenario of NCJT) in which different network devices respectively transmit independent data streams to the terminal device, a data stream received by the terminal device comes from only one network device, so that after the terminal device receives CSI-RSs from the different network devices, the terminal device may continue to perform CQI measurement based on the mapping relationship in the foregoing single-station communication scenario. For example, in the NCJT scenario, different data streams may be mapped to antenna ports of two TRPs with different large-scale parameters, and simultaneously transmitted to a same specified terminal device, to effectively improve a data transmission rate and reliability.

Because the foregoing Pc ratio and CQI measurement method (including the foregoing calculation processes of Formula (1) and Formula (2)) defined for the single-station communication scenario is not directly applicable to the NCJT scenario, the foregoing Pc ratio concept and CQI measurement method need to be improved. Further descriptions are provided below.

That the different network devices include a network device 1 and a network device 2 is used as an example. The terminal device needs to report the CQI based on a mapping relationship between a data stream transmitted on a downlink channel between the terminal device and the network device 1 and a CSI-RS port of the network device 1, and based on a mapping relationship between a data stream transmitted on a downlink channel between the terminal device and the network device 2 and a CSI-RS port of the network device 2. During CQI calculation, the terminal device assumes that v1-layer PDSCH signals transmitted on PDSCH ports [1000, ..., and 1000+$v$1-1] may be mapped, for equivalent transmission, to a first group of CSI-RS ports [3000, ..., and 3000+P-1] indicated by a CRI, and v2-layer PDSCH signals transmitted on PDSCH ports [1000, ..., and 1000+$v$1+$v$2-1] may be mapped, for equivalent transmission, to a second group of CSI-RS ports [3000, ..., and 3000+P-1] indicated by the CRI. In this case, the mapping relationship satisfies:

$$\begin{bmatrix} y_j^{(3000)}(i) \\ \cdots \\ y_j^{(3000+P-1)}(i) \end{bmatrix} = W_j(i) \begin{bmatrix} x^{((j-1)*v_1)}(i) \\ \cdots \\ x^{(v_1+(j-1)*v_2-1)}(i) \end{bmatrix} \quad (3)$$

j=1 or 2. $W_j(i)$ represents a precoding matrix corresponding to a j$^{th}$ reported PMI, and a ratio of PDSCH signal power of a layer mapped to P antenna ports of a j$^{th}$ (j=1 or 2) group of CSI-RS resources for transmission to CSI-RS reference signal power is equal to a Pc ratio configured in a corresponding CSI-RS resource.

Further, in a scenario (for example, the scenario may include a communication scenario of CJT) in which data streams transmitted between different network devices and the terminal device are no longer independent, in the CJT scenario, each data layer is mapped, by using a weighted vector, to a plurality of TRPs participating in coordination. If large-scale parameters of channels of the TRPs are the same, and a same frequency source is used, coherent transmission is equivalent to splicing a plurality of subarrays into a virtual array of a higher dimension, so that a higher beamforming/-precoding/multiplexing gain can be obtained. In addition, because a same data stream is mapped, by using the weighted vector, to the plurality of TRPs participating in coordination, and is simultaneously transmitted to a same specified terminal device, the terminal device needs to comprehensively process reference signal power from the plurality of different TRPs and the power control offset, to calculate an SINR, and finally determine a reported CQI value. In the foregoing calculation processes (including the foregoing calculation processes of Formula (1), Formula (2), and Formula (3)) of the single-station communication scenario and the NCJT scenario, because each data stream is essentially still transmitted via a single TRP, the foregoing CQI measurement method is not applicable to the CJT scenario.

In conclusion, in a communication scenario in which a data stream received by the terminal device may come from different network devices, when the terminal device still performs CQI measurement based on the foregoing single-station communication scenario, the CQI measurement is easily to be inaccurate. Consequently, accuracy of downlink channel quality obtained by the network device based on the CQI is reduced, and communication efficiency is affected.

To resolve the foregoing problem, this application provides a communication method and a communication apparatus. The following provides descriptions with reference to the accompanying drawings.

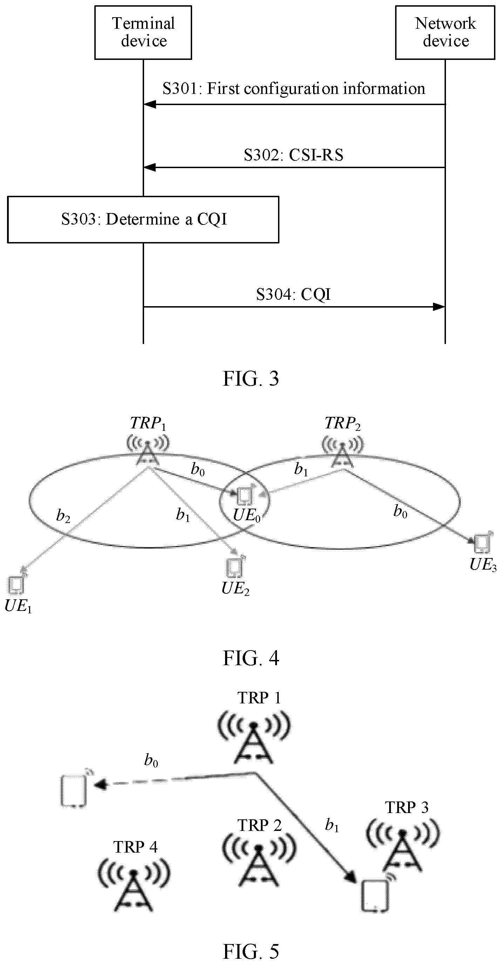

FIG. 3 is a diagram of a communication method according to this application.

It should be noted that, in FIG. 3, an example in which a terminal device and a network device are used as execution bodies of schematic interaction is used to illustrate the method. However, the execution bodies of the schematic interaction are not limited in this application. For example, the terminal device in FIG. 3 may alternatively be a chip, a chip system, or a processor that supports the terminal device in implementing the method, or may be a logic module or software that can implement all or some functions of the terminal device. The network device in FIG. 3 may alternatively be a chip, a chip system, or a processor that supports the network device in implementing the method, or may be a logic module or software that can implement all or some functions of the network device.

The method shown in FIG. 3 includes steps S301, S302, S303, and S304. The following separately describes the steps.

S301: The network device sends first configuration information.

In this embodiment, the network device sends the first configuration information in step S301. Correspondingly, the terminal device receives the first configuration information in step S301. The first configuration information includes configuration information of n CSI-RSs, and n is an integer greater than 1.

In a possible implementation, each piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource.

Specifically, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

It should be understood that the foregoing implementation may alternatively be expressed as: dividing one CSI-RS resource set into n groups, where a CSI-RS resource in each of the n groups is used to carry a CSI-RS sent by a network device to the terminal device; or dividing a plurality of CSI-RS ports included in one CSI-RS resource into n groups, where a CSI-RS port in each of the n groups is used to carry a CSI-RS sent by a network device to the terminal device.

In a possible implementation, the configuration information of the n CSI-RSs is n CSI-RS resource configurations, and each CSI-RS resource configuration includes information such as a quantity of ports corresponding to the CSI-RS resource, a time-frequency resource location, a periodicity type, and a QCL assumption.

In another possible implementation, the configuration information of the n CSI-RSs is one CSI-RS resource configuration, ports in the CSI-RS resource are divided into n groups of port sets, the n groups of port sets are in one-to-one correspondence with the n CSI-RSs, and each group of port sets correspond to a specific QCL assumption configuration.

Optionally, when the configuration information of the n CSI-RSs is one CSI-RS resource configuration, CSI-RS ports in different groups cannot belong to a same code-division multiplexing (code-division multiplexing, CDM) group.

S302: The network device sends the CSI-RS.

In this embodiment, the configuration information of the n CSI-RSs in the first configuration information respectively corresponds to the n different network devices. For one of the n different network devices, the network device sends one of the n CSI-RSs in step S302, in other words, the n different network devices send the n CSI-RSs in step S302. Correspondingly, the terminal device receives the n CSI-RSs in step S302.

It should be understood that the n CSI-RSs received by the terminal device respectively come from the n different network devices. A coordination relationship between the n different network devices and the network device that sends the first configuration information in step S301 are not limited in this application. For example, the n different network devices may include one primary network device (or referred to as a serving transmission reception point (transmission reception point, TRP)) and n-1 secondary network devices (or referred to as coordinated TRPs). In this case, the network device that sends the first configuration information in step S301 may be the primary network device or any secondary network device. For another example, in the n different network devices, a primary network device and a secondary network device may not be distinguished. In this case, the network device that sends the first configuration information in step S301 may be any one of the n network devices.

S303: The terminal device determines a CQI.

In this embodiment, the terminal device determines the CQI based on m CSI-RSs in the n CSI-RSs received in step S302 and a mapping relationship, where the CQI indicates channel quality of a PDSCH, the mapping relationship is a mapping relationship between a data stream of the PDSCH and CSI-RS ports corresponding to the m CSI-RSs, m is an integer greater than 1, and m is less than or equal to n.

Optionally, CQI reporting corresponds to one piece of CSI reporting configuration information, currently reported information is configured in the CSI reporting configuration information and includes the CQI, the CSI reporting configuration information is associated with the configuration information of the n CSI-RSs, and the configuration information of the n CSI-RSs corresponds to a CMR of the CSI reporting configuration information.

In a manner, m is equal to n. In this case, the CMR of the CQI reporting is the n CSI-RSs.

In another manner, m is less than n. In this case, the CMR of the CQI reporting is some CSI-RSs selected from the n CSI-RSs.

Optionally, the network device configures the terminal device to select some CSI-RSs from the n CSI-RSs as CMRs. Specifically, the network device pre-configures a plurality of measurement assumptions, and a CMR in each measurement assumption includes some/all of the n CSI-RSs. The terminal device determines, based on the plurality of measurement assumptions, to report one of the measurement assumptions, and the CQI is determined based on the measurement assumption.

Optionally, the terminal device reports the measurement assumption along with the CQI; or the terminal device reports, along with the CQI, indexes of the m CSI-RSs corresponding to the CQI.

In a possible implementation, before the terminal device determines the CQI based on the m CSI-RSs and the mapping relationship in step S303, the method further includes: determining the m CSI-RSs from the n CSI-RSs.

Specifically, after the terminal device receives the n CSI-RSs in step S302, the terminal device determines the CQI based on some or all of the n CSI-RSs (that is, the m CSI-RSs). In other words, after the terminal device selects some or all CSI-RSs (that is, the m CSI-RSs) from the n CSI-RSs based on a pre-configured selection mechanism, the terminal device may further determine the CQI based on the selected m CSI-RSs. Therefore, the terminal device can flexibly select, from the n CSI-RSs, the m CSI-RSs that meet the pre-configured selection mechanism, to improve flexibility of implementing the solution.

Further, a process in which the terminal device determines the m CSI-RSs from the n CSI-RSs includes: determining the m CSI-RSs based on a first parameter and the n CSI-RSs, where the first parameter includes a value of m or a first threshold.

Optionally, the first parameter is pre-configured in the terminal device.

Optionally, the first parameter is sent by the network device to the terminal device, and the first parameter may be included in the first configuration information or other information.

It should be understood that the first threshold may indicate a transmission performance threshold, for example, an RSRP threshold, an RSRQ threshold, an SINR threshold, an SNR threshold, or another performance parameter threshold. This is not limited herein.

In an implementation, the first threshold is used to define a criterion for selecting the m CSI-RSs or the measurement assumption. Specifically, it is considered that, in two measurement assumptions, a first measurement assumption corresponds to k1 CSI-RSs, a second measurement assumption corresponds to k2 CSI-RSs, and k1<k2. The second measurement assumption is reported only when a difference between transmission performance (for example, an SINR) determined based on the second measurement assumption and transmission performance determined based on the first measurement assumption is greater than the first threshold. Otherwise, the first measurement assumption is reported. In this manner, a quantity of coordinated network devices (for example, TRPs) can be properly controlled, to reduce complexity on a network side.

In a possible implementation, the n CSI-RSs correspond to a plurality of measurement assumptions, and the measurement assumption is used to determine the m CSI-RSs corresponding to the CQI. Specifically, the n CSI-RSs respectively correspond to the n different network devices, and any two or more of the n different network devices may form a coordination set that provides a communication service. Each coordination set may be referred to as a measurement assumption, that is, the n CSI-RSs correspond to the plurality of measurement assumptions, and one of the plurality of measurement assumptions corresponds to the m CSI-RSs, so that the measurement assumption can determine the m CSI-RSs corresponding to the CQI.

In a possible implementation, before step S303, the method further includes: The terminal device receives first indication information, where the first indication information indicates at least one of the plurality of measurement assumptions. The terminal device determines one measurement assumption from the at least one measurement assumption, where the measurement assumption corresponds to the m CSI-RSs.

Optionally, the first indication information is included in the first configuration information, or the first indication information is included in other information. This is not limited herein.

Specifically, the terminal device may further determine, based on the at least one measurement assumption indicated by the first indication information, one of the plurality of measurement assumptions corresponding to the n CSI-RSs, and determine, based on a network device corresponding to the measurement assumption, the m CSI-RSs corresponding to the CQI. Therefore, after determining the m CSI-RSs, the terminal device performs the process of determining the CQI based on the m CSI-RSs in step S303.

It should be understood that the first indication information may be used to include an index of a network device corresponding to the at least one measurement assumption. The first indication information may alternatively include an index of a CSI-RS corresponding to the at least one measurement assumption. The first indication information may alternatively include an index of a CSI-RS port set of a network device corresponding to the at least one measurement assumption. The first indication information may alternatively indicate the at least one of the plurality of measurement assumptions in another manner. This is not limited herein.

In a possible implementation, when the CQI is calculated, it is assumed that the data stream of the PDSCH is mapped to a CSI-RS port corresponding to each CSI-RS, and there is usually a specific offset between EPRE of the data stream and EPRE of the CSI-RS. Therefore, before step S303, the terminal device may further receive second indication information from the network device, to indicate a power offset, and the power offset indicates the offset, so that impact of the offset can be reduced or eliminated based on the power offset in a process in which the terminal device determines the CQI, to further improve accuracy of the CQI determined by the terminal device. The following describes implementations of the second indication information.

Implementation 1: Each of the n CSI-RSs corresponds to a power offset in a different measurement assumption.

Before step S303, the method further includes: The terminal device receives the second indication information, where the second indication information indicates a power offset corresponding to each CSI-RS in the at least one of the plurality of measurement assumptions. In other words, each CSI-RS corresponds to one or more independently configured power offsets, and a same CSI-RS corresponds to one independently configured power offset in each of different measurement assumptions. For a specific CSI-RS in a specific measurement assumption, a power offset corresponding to the CSI-RS indicates a ratio of first signal energy to second signal energy, where the first signal energy is the EPRE of the data stream that is of the PDSCH and that is mapped to the CSI-RS port corresponding to each CSI-RS, and the second signal energy is the EPRE of the CSI-RS. A process in which the terminal device determines the CQI based on the m CSI-RSs and the mapping relationship in step S303 includes: The terminal device determines the CQI based on the second indication information, the m CSI-RSs, and the mapping relationship.

For example, it is assumed that a CSI-RS (denoted as a CSI-RS 1) in the n CSI-RSs corresponds to a measurement assumption 1 and a measurement assumption 2. In this case, in the implementation 1, the second indication information indicates a power offset (denoted as a power offset 1) corresponding to the CSI-RS 1 in the measurement assumption 1 and a power offset (denoted as a power offset 2) corresponding to the CSI-RS 1 in the measurement assumption 2. The power offset 1 corresponds to the measurement assumption 1. To be specific, if the terminal device selects the measurement assumption 1 in step S303, the terminal device determines that the power offset 1 is a power offset of the CSI-RS 1. The power offset 2 corresponds to the measurement assumption 2. To be specific, if the terminal device selects the measurement assumption 2 in step S303, the terminal device determines that the power offset 2 is a power offset of the CSI-RS 1.

For example, if all data streams corresponding to PDSCH transmission correspond to one CQI for reporting, the first signal energy is EPRE of all the data streams that correspond to the PDSCH transmission and that are mapped to the CSI-RS port corresponding to the CSI-RS.

In the implementation 1, a power offset configuration policy may be independently used for each measurement assumption, to support flexible power allocation. In addition, it can be ensured that a fair power allocation policy is used for different measurement assumptions, that is, it is ensured that the EPRE of the PDSCH transmission is the same in the different measurement assumptions.

Implementation 2: For any one of the n CSI-RSs, the CSI-RS corresponds to a same power offset in different measurement assumptions.

Before step S303, the method further includes: The terminal device receives the second indication information, where the second indication information indicates a power offset corresponding to each of the n CSI-RSs. In other words, each CSI-RS corresponds to one independently configured power offset, and a same CSI-RS corresponds to the independently configured power offset in different measurement assumptions. For any one of the n CSI-RSs, power offsets corresponding to the CSI-RS in different measurement assumptions are the same. In the implementation 2, the terminal device may determine, based on the second indication information, that the power offset corresponding to the CSI-RS indicates a ratio of first signal energy to second signal energy, where the first signal energy is the EPRE of the data stream that is of the PDSCH and that is mapped to the CSI-RS port corresponding to each CSI-RS, and the second signal energy is the EPRE of the CSI-RS. That the terminal device determines the CQI based on the m CSI-RSs and the mapping relationship in step S303 includes: The terminal device determines the CQI based on the second indication information, the m CSI-RSs, and the mapping relationship.

For example, it is assumed that a CSI-RS (denoted as a CSI-RS 1) in the n CSI-RSs corresponds to a measurement assumption 1 and a measurement assumption 2. In this case, in the implementation 2, the second indication information indicates a power offset (denoted as a power offset 1) corresponding to the CSI-RS 1. Both the measurement assumption 1 and the measurement assumption 2 correspond to the power offset 1. To be specific, in step S303, regardless of whether CSI-RSs corresponding to the measurement assumption 1 are selected by the terminal device as the m CSI-RSs or CSI-RSs corresponding to the measurement assumption 2 are selected as the m CSI-RSs, the terminal device determines the power offset 1 as the power offset of the CSI-RS 1.

In the implementation 2, for any one of the n CSI-RSs, a same power offset configuration policy may be used for the CSI-RS in different measurement assumptions, to simplify a manner of configuring power offsets of different CSI-RSs in the n CSI-RSs.

Implementation 3: For different CSI-RSs in the n CSI-RSs, the different CSI-RSs correspond to a same power offset in different measurement assumptions.

Before step S303, the method further includes: The terminal device receives the second indication information, where the second indication information indicates a same power offset corresponding to each of the n CSI-RSs. In other words, only one power offset is configured for the n CSI-RSs, that is, different CSI-RSs in the n CSI-RSs correspond to the power offset in different measurement assumptions. Power offsets corresponding to different CSI-RSs in the n CSI-RSs in different measurement assumptions are the same. In the implementation 2, the terminal device may determine, based on the second indication information, that the power offset corresponding to the CSI-RS indicates a ratio of first signal energy to second signal energy, where the first signal energy is the EPRE of the data stream that is of the PDSCH and that is mapped to the CSI-RS port corresponding to each CSI-RS, and the second signal energy is the EPRE of the CSI-RS. That the terminal device determines the CQI based on the m CSI-RSs and the mapping relationship in step S303 includes: The terminal device determines the CQI based on the second indication information, the m CSI-RSs, and the mapping relationship.

For example, it is assumed that a CSI-RS (denoted as a CSI-RS 1) in the n CSI-RSs corresponds to a measurement assumption 1, and another CSI-RS (denoted as a CSI-RS 2) in the n CSI-RSs corresponds to a measurement assumption 2. In this case, in the implementation 3, the second indication information indicates that the n CSI-RSs correspond to a same power offset (denoted as a power offset 1). Both the measurement assumption 1 and the measurement assumption 2 correspond to the power offset 1. To be specific, in step S303, regardless of whether CSI-RSs corresponding to the measurement assumption 1 are selected by the terminal device as the m CSI-RSs or CSI-RSs corresponding to the measurement assumption 2 are selected as the m CSI-RSs, the terminal device determines the power offset 1 as a power offset of the CSI-RS 1.

In the implementation 3, for different CSI-RSs in the n CSI-RSs, a same power offset configuration policy may be used for the different CSI-RSs in different measurement assumptions, to simplify a manner of configuring power offsets of the different CSI-RSs in the n CSI-RSs.

Optionally, in the foregoing implementation 1 and implementation 2, the second indication information is included in the first configuration information, or the second indication information is included in other information. This is not limited herein.

Optionally, in the foregoing implementation 1 and implementation 2, the power offset indicated by the second indication information corresponds to the power offset corresponding to each CSI-RS in the at least one measurement assumption indicated by the first indication information, or the power offset indicated by the second indication information may correspond to a power offset corresponding to each CSI-RS in the plurality of measurement assumptions corresponding to the n CSI-RSs.

Specifically, in the PDSCH indicated by the CQI, when the CQI is calculated, it is assumed that the data stream of the PDSCH is mapped to the CSI-RS port corresponding to each CSI-RS, and there is usually the specific offset between the EPRE of the data stream and the EPRE of the CSI-RS. Therefore, the power offset indicated by the second indication information received by the terminal device indicates the offset, so that the impact of the offset can be reduced or eliminated based on the power offset in the process in which the terminal device determines the CQI, to further improve the accuracy of the CQI determined by the terminal device.

In the foregoing implementation 1, the second indication information indicates the power offset corresponding to each CSI-RS in the at least one of the plurality of measurement assumptions. In other words, the power offset received by the terminal device may be configured by using the measurement assumption as a configuration granularity. Different measurement assumptions correspond to different network devices participating in coordination, so that a same CSI-RS may correspond to different power offsets in different measurement assumptions. In a configuration manner in which the measurement assumption is used as the configuration granularity, the accuracy of the CQI obtained based on the power offset can be further improved.

In the foregoing implementation 2, the second indication information indicates the power offset corresponding to each of the n CSI-RSs. In other words, the power offset received by the terminal device may be configured by using the CSI-RS as a configuration granularity, that is, the second indication information indicates power offsets respectively corresponding to the n CSI-RSs. In this way, after determining the m CSI-RSs corresponding to the CQI, the terminal device may determine, from the power offsets respectively corresponding to the n CSI-RSs, power offsets respectively corresponding to the m CSI-RSs. This is easy to implement.

Optionally, the power offset that corresponds to each CSI-RS and that is indicated by the second indication information is the same, so that configuration of the second indication information can be simplified, overheads can be reduced, and implementation is easy.

In a possible implementation, the mapping relationship satisfies:

$$
\begin{bmatrix}
y_{j=0}^{(3000)}(i) \\
\dots \\
y_{j=0}^{(3000+P_0-1)}(i) \\
\dots \\
y_{j=n-1}^{(3000)}(i) \\
\dots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\dots \\
x^{(v-1)}(i)
\end{bmatrix}
\quad (4)
$$

$x^{(k)}(i)$, where $k = 0, 1, \dots,$ or $v-1$, represents a $k^{th}$ data stream of a PDSCH on an $i^{th}$ orthogonal frequency division multiplexing OFDM symbol; $y_j^{(p)}(i)$, where $j=0, 1, \dots,$ or $n-1$, and $p=3000, \dots,$ or $3000 + P_{n-1}$, represents a data stream that is of the PDSCH and that is transmitted on a $q^{th}$ CSI-RS port of a $j^{th}$ CSI-RS, where $q=0, \dots,$ or $P_j-1$; and $W_j(i)$ represents a precoding matrix that corresponds to the $j^{th}$ CSI-RS and to which a data stream of the PDSCH is mapped.

Specifically, in the foregoing implementation, a specific implementation for determining the mapping relationship between the data stream of the PDSCH and the CSI-RS ports corresponding to the m CSI-RSs is provided. In this implementation, n port sets and n precoding matrices that correspond to the n CSI-RSs are included, so that the mapping relationship does not change due to a change of a value (that is, the value of m) of the CSI-RS corresponding to the CQI.

Optionally, in $W_0(i), \dots,$ and $W_{n-1}(i)$, a quantity of non-zero matrices is m. Specifically, in the foregoing implementation of the mapping relationship used to determine the CQI, because the CQI is determined based on the m CSI-RSs in the n CSI-RSs, m precoding matrices in the n precoding matrices in this implementation are non-zero matrices.

Optionally, for the $j^{th}$ CSI-RS in the n CSI-RSs, where j=0, ..., or j=n-1, a mapping relationship thereof satisfies:

$$
\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}
$$

$x^{(k)}(i)$, where k = 0, 1, ..., or v- 1, represents the $k^{th}$ data stream of the PDSCH on the $i^{th}$ orthogonal frequency division multiplexing OFDM symbol; $y_j^{(p)}(i)$, where j=0, 1, ..., or n-1, and p=3000, ..., or $3000 + P_{n-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

Further, optionally, in the foregoing implementation, except that the m precoding matrices corresponding to the m CSI-RSs are the non-zero matrices, other n-m matrices may be zero matrices, to simplify calculation complexity and reflect the mapping relationship more accurately.

In another possible implementation, the mapping relationship satisfies:

$$
\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix} \quad (5)
$$

$x^{(k)}(i)$, where k = 0, 1, ..., or v- 1, represents a $k^{th}$ data stream of a PDSCH on an $i^{th}$ orthogonal frequency division multiplexing OFDM symbol; $y_j^{(p)}(i)$, where j=0, 1, ..., or m-1, and p=3000, ..., or $3000 + P_{m-1}$, represents a data stream that is of the PDSCH and that is transmitted on a $q^{th}$ CSI-RS port of a $j^{th}$ CSI-RS, where q=0, ..., or $P_j$-1; and $W_j(i)$ represents a precoding matrix that corresponds to the $j^{th}$ CSI-RS and to which a data stream of the PDSCH is mapped.

Optionally, for the $j^{th}$ CSI-RS in the m CSI-RSs, where j=0, ..., or j=n-1, a mapping relationship thereof satisfies:

$$
\begin{bmatrix} y_j^{(3000)}(i) \\ \cdots \\ y_j^{(3000+P_j-1)}(i) \end{bmatrix} = W_j(i) \begin{bmatrix} x^{(0)}(i) \\ \cdots \\ x^{(v-1)}(i) \end{bmatrix}
$$

$x^{(k)}(i)$, where k = 0, 1, ... , or v- 1, represents the $k^{th}$ data stream of the PDSCH on the $i^{th}$ orthogonal frequency division multiplexing OFDM symbol; $y_j^{(p)}(i)$, where j=0, 1, ..., or m-1, and p=3000, ..., or $3000 + P_{m-1}$, represents the data stream that is of the PDSCH and that is transmitted on the $q^{th}$ CSI-RS port of the $j^{th}$ CSI-RS, where q=0, ..., or $P_j$-1; and $W_j(i)$ represents the precoding matrix that corresponds to the $j^{th}$ CSI-RS and to which the data stream of the PDSCH is mapped.

Specifically, in the foregoing implementation, a specific implementation for determining the mapping relationship between the data stream of the PDSCH and the CSI-RS ports corresponding to the m CSI-RSs is provided. In this implementation, m port sets and m precoding matrices that correspond to the m CSI-RSs used to determine the CQI are included, to simplify calculation complexity and reflect the mapping relationship more accurately.

Optionally, each measurement assumption independently corresponds to one mapping relationship.

Optionally, it can be learned from the foregoing implementation 1 and implementation 2 that the power offset indicates the ratio of the first signal energy to the second signal energy. In the first signal energy and the second signal energy, in addition to the foregoing definition that "the first signal energy is the EPRE of the data stream that is of the PDSCH and that is mapped to the CSI-RS port corresponding to each CSI-RS, and the second signal energy is the EPRE of each CSI-RS", for the power offset corresponding to each of the m (or n) CSI-RSs, there may also be other definitions.

Examples are as follows (in the following examples, the power offset is denoted as a Pc ratio):

Example 1: The first signal energy is energy of each data stream that is of the PDSCH and that is mapped to the CSI-RS, and the second signal energy is energy of one CSI-RS port of the CSI-RS.

In the example 1, a Pc ratio configured in a j$^{th}$ group of CSI-RS resources may be expressed as:

$$Pc^j = \frac{|x^p(i)|^2}{\left|\beta^j_{CSI-RS}\right|^2}$$

$\left|\beta^j_{CSI-RS}\right|^2$ represents single-port power of the j$^{th}$ group of CSI-RS resources, and $|x^p(i)|^2$ represents single-port power of the PDSCH.

In measurement assumptions corresponding to the m CSI-RSs, total PDSCH transmit power on one subcarrier may be expressed as:

$$\sum_{p=0}^{v-1} |x^p(i)|^2 = \sum_{j=0}^{m-1} Pc^j \times v \times \left(\beta^j_{CSI-RS}\right)^2$$

$2 \le m \le 4$, and m represents a quantity of TRPs participating in coherent joint transmission in a measurement assumption m, that is, a quantity of CSI-RS resource groups.

Example 2: The first signal energy is a sum of energy, on one RE, of all data streams that are of the PDSCH and that are mapped to the CSI-RS, and the second signal energy is a sum of energy of each CSI-RS port of the CSI-RS.

In the example 2, a Pc ratio configured in a j$^{th}$ group of CSI-RS resources may be expressed as:

$$Pc^j = \frac{\sum_{p=0}^{v-1}|x^p(i)|^2}{P \times \left|\beta^j_{CSI-RS}\right|^2}$$

$\left|\beta^j_{CSI-RS}\right|^2$ represents single-port power of the j$^{th}$ group of CSI-RS resources, P represents a quantity of CSI-RS ports, and $|x^p(i)|^2$ represents single-port power of the PDSCH. In a measurement assumption m, total PDSCH transmit power on one subcarrier may be expressed as:

$$\sum_{p=0}^{v-1} |x^p(i)|^2 = \sum_{j=0}^{m-1} Pc^j \times P \times \left(\beta^j_{CSI-RS}\right)^2$$

$2 \le m \le 4$, and m represents a quantity of TRPs participating in coherent joint transmission in the measurement assumption m, that is, a quantity of CSI-RS resource groups.

Example 3: The first signal energy is a sum of energy of all data streams that are of the PDSCH and that are mapped to the CSI-RS, and the second signal energy is EPRE of the CSI-RS.

In the example 3, a Pc ratio configured in a j$^{th}$ group of CSI-RS resources may be expressed as:

$$Pc^j = \frac{\sum_{p=0}^{v-1}|x^p(i)|^2}{N^j_{CDM} \times \left|\beta^j_{CSI-RS}\right|^2}$$

$\left|\beta^j_{CSI-RS}\right|^2$ represents single-port power of the j$^{th}$ group of CSI-RS resources, $|x^p(i)|^2$ represents single-port power of the PDSCH, and $N^j_{CDM}$ represents a quantity of CSI-RS ports that are in the j$^{th}$ group of CSI-RSs and that are multiplexed onto one subcarrier. In a measurement assumption m, total PDSCH transmit power on one subcarrier may be expressed as:

$$\sum\nolimits_{p=0}^{v-1} |x^p(i)|^2 = \sum\nolimits_{j=1}^{m} Pc^j \times N_{CDM}^{j} \times \left(\beta_{CSI-RS}^{j}\right)^2$$

Optionally, $N_{CDM}^{j}$ is related to a CSI-RS resource configuration, for example, related to a quantity of ports in the CSI-RS resource and a multiplexing manner between the ports. Specifically, when $N_{CDM}^{j} = 2$, two CSI-RS ports are multiplexed onto two REs through a timedomain/frequency-domain OCC. When $N_{CDM}^{j} = 4$, four CSI-RS ports are multiplexed onto four REs through a time-frequency two-dimensional OCC or a time-domain/frequency-domain OCC. When $N_{CDM}^{j} = 8$, eight CSI-RS ports are multiplexed onto eight REs through a time-frequency two-dimensional OCC.

$2 \le m \le 4$, and m represents a quantity of TRPs participating in coherent joint transmission in the measurement assumption m, that is, a quantity of CSI-RS resource groups.

S304: The terminal device sends the CQI.

In this embodiment, the terminal device sends the CQI in step S304. Correspondingly, the network device receives the CQI in step S304.

In a possible implementation, the CQI sent by the terminal device in step S304 is included in CSI, and the CSI further includes at least one of the following:

indexes of CSI-RS port sets corresponding to the m CSI-RSs;
the indexes of the m CSI-RSs; or
a PMI, where the PMI indicates precoding matrices corresponding to CSI-RS port sets corresponding to the m CSI-RSs.

Specifically, after the terminal device receives the n CSI-RSs, the CQI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the CQI.

According to the technical solution shown in FIG. 3, after the terminal device receives the n CSI-RSs based on the first configuration information in step S302, the terminal device determines the CQI based on the m CSI-RSs in the n CSI-RSs and the mapping relationship in step S303. The CQI indicates the channel quality of the PDSCH, and the mapping relationship used to determine the CQI is the mapping relationship between the data stream of the PDSCH and the CSI-RS ports corresponding to the m CSI-RSs, where m is the integer greater than 1, that is, the m CSI-RSs come from different network devices. In other words, in a scenario in which the data stream of the PDSCH comes from different network devices, in a process in which the terminal device determines the CQI, the terminal device considers/assumes (assume) that there is the mapping relationship between the data stream of the PDSCH and CSI-RS ports corresponding to the different network devices, so that the terminal device determines, based on the mapping relationship, a correspondence between the data stream of the PDSCH and the different network devices, and determines and sends the CQI. Therefore, in an application scenario in which the data stream received by the terminal device comes from the different network devices, the accuracy of the CQI determined by the terminal device is improved, so that accuracy of the downlink channel quality subsequently obtained by the network device based on the CQI is improved, thereby improving communication efficiency.

In the NCJT scenario described before the solution shown in FIG. 3, a codebook subset restriction (CBSR) may be further configured for each TRP in a codebook configuration (CodebookConfig), so that a beam direction can be effectively controlled to avoid causing strong interference to a neighboring cell, and flexibility of beam selection of each TRP is ensured.

For example, as shown in FIG. 4, an example in which a TRP 1 and a TRP 2 form a coordination set and an NCJT transmission manner is applied is used. In FIG. 4, an example in which a coordination range of the coordination set of the TRP 1 and the TRP 2 includes two elliptical coverage areas is used. Beams b1 and b2 of the TRP 1 and a beam b0 of the TRP 2 cause strong interference to a neighboring cell (not shown in the figure) outside the coordination set, but a beam b0 of the TRP 1 and a beam b1 of the TRP 2 do not cause strong interference to the neighboring cell outside the coordination set. Because a coordination manner between the TRP 1 and the TRP 2 is NCJT, that is, data streams sent by the TRP 1 and the TRP 2 to a same terminal device are independently sent, the TRP 1 and the TRP 2 may respectively determine CBSR configurations, that is, $CBSR_1 = \{b_0\}$ and $CBSR_2 = \{b_1\}$. In addition, the TRP 1 delivers the determined CBSR configuration to a terminal device (for example, UE 0) connected to the TRP 1, and the TRP 2 delivers the determined CBSR configuration to a terminal device (for example, the UE 0) connected to the TRP 2. In this way, the UE 0 determines, based on the CBSR configuration delivered by the TRP 1 and the CBSR configuration delivered by the TRP 2, a codebook subset allowed to be used in the coordination set, so that a requirement for performing non-coherent joint transmission by the TRPs in the coordination set can be met while the strong interference to the neighboring cell can be avoided.

Different from the NCJT scenario, in a coherent joint transmission (CJT) scenario, data streams sent by different TRPs to a same terminal device are not independently sent. FIG. 5 is used as an example. When a TRP 1 and a TRP 2 are selected to perform coherent joint transmission, beams b0 and b1 need to be constrained to avoid causing strong interference to a neighboring cell. When a TRP 1, a TRP 2, and a TRP 3 are all selected to perform coherent joint transmission, only beams b0 need to be constrained to avoid causing strong interference to a neighboring cell. Therefore, a manner in which different TRPs respectively determine and deliver CBSR configurations in the foregoing NCJT scenario is no longer applicable.

Therefore, in an application scenario (for example, the CJT scenario) in which a data stream received by the terminal device comes from different network devices, for the terminal device, how to determine CBSR configuration information is an urgent technical problem to be resolved.

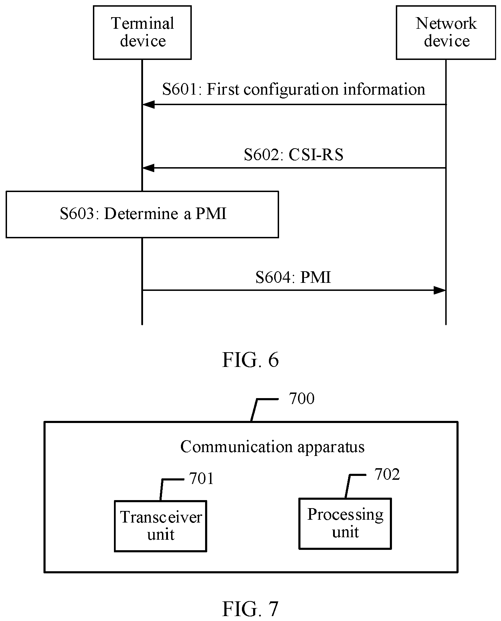

FIG. 6 is a diagram of a communication method according to this application.

It should be noted that, in FIG. 6, an example in which a terminal device and a network device are used as execution bodies of schematic interaction is used to illustrate the method. However, the execution bodies of the schematic interaction are not limited in this application. For example, the terminal device in FIG. 6 may alternatively be a chip, a chip system, or a processor that supports the terminal device in implementing the method, or may be a logic module or software that can implement all or some functions of the terminal device. The network device in FIG. 6 may alternatively be a chip, a chip system, or a processor that supports the network device in implementing the method, or may be a logic module or software that can implement all or some functions of the network device.

The method shown in FIG. 3 includes steps S601, S602, S603, and S604. The following separately describes the steps.

S601: The network device sends first configuration information.

In this embodiment, the network device sends the first configuration information in step S601. Correspondingly, the terminal device receives the first configuration information in step S601. The first configuration information includes configuration information of n CSI-RSs and CBSR configuration information corresponding to the n CSI-RSs, the CBSR configuration information is used to configure a plurality of CBSRs, and n is an integer greater than 1.

In a possible implementation, one piece of configuration information in the configuration information of the n CSI-RSs indicates one CSI-RS port set. The CSI-RS port set includes one CSI-RS resource, and n CSI-RS resources belong to a same CSI-RS resource set. Alternatively, the CSI-RS port set includes at least one port, and ports included in n CSI-RS port sets belong to a same CSI-RS resource. Specifically, each piece of configuration information in the configuration information of the n CSI-RSs indicates one CSI-RS port set, that is, the n CSI-RSs respectively come from the n different CSI-RS port sets. In addition, the n different CSI-RS port sets belong to the same CSI-RS resource set, or the n different CSI-RS port sets belong to the same CSI-RS resource. In this way, n network devices participating in coordination send the n CSI-RSs based on the same CSI-RS resource set or the same CSI-RS resource, so that it is easy to implement signal receiving and sending of the n CSI-RSs, and overheads of the configuration information of the n CSI-RSs are reduced.

It should be noted that, in a plurality of pieces of CBSR information configured by using the CBSR configuration information, a matrix dimension of each piece of CBSR information is determined based on a quantity of CSI-RS ports corresponding to the CSI-RS.

S602: The network device sends the CSI-RS.

In this embodiment, the configuration information of the n CSI-RSs in the first configuration information respectively corresponds to the n different network devices. For one of the n different network devices, the network device sends one of the n CSI-RSs in step S602, in other words, the n different network devices send the n CSI-RSs in step S602. Correspondingly, the terminal device receives the n CSI-RSs in step S602.

It should be understood that the n CSI-RSs received by the terminal device in step S602 respectively come from the n different network devices. A coordination relationship between the n different network devices and the network device that sends the first configuration information in step S601 are not limited in this application. For example, the n different network devices may include one primary network device (or referred to as a serving transmission reception point (transmission reception point, TRP)) and n-1 secondary network devices (or referred to as coordinated TRPs). In this case, the network device that sends the first configuration information in step S601 may be the primary network device or any secondary network device. For another example, in the n different network devices, a primary network device and a secondary network device may not be distinguished. In this case, the network device that sends the first configuration information in step S601 may be any one of the n network devices.

S603: The terminal device determines a PMI.

In this embodiment, the terminal device determines the PMI based on m CSI-RSs in the n CSI-RSs received in step S602 and m of the plurality of CBSRs. m is an integer greater than 1, m is less than or equal to n, and the m CSI-RSs are in one-to-one correspondence with m pieces of CBSR information.

In a possible implementation, that the CBSR configuration information is used to configure a plurality of CBSRs includes: The CBSR configuration information is used to configure at least one group of CBSRs, where each group of CBSRs include at least two CBSRs. Before the terminal device determines the PMI based on the m CSI-RSs and m of the plurality of CBSRs in step S603, the method further includes: The terminal device determines one group of CBSRs from the at least one group of CBSRs, where the group of CBSRs include the m CBSRs.

Specifically, the CBSR configuration information in the first configuration information is used to configure the at least one group of CBSRs, so that before the terminal device determines the PMI, the m CBSRs included in the group of CBSRs determined by the terminal device in the at least one group of CBSRs are used as one of bases for determining the PMI. In other words, the CBSR configuration information in the first configuration information is used to configure the CBSR in a configuration manner in which the "group" is used as a granularity, so that after determining a group of CBSRs based on a pre-configured selection mechanism, the terminal device uses m CBSRs included in the group of CBSRs as one of bases for determining the PMI.

Optionally, when the at least one group of CBSRs configured by using the CBSR configuration information include a plurality of groups of CBSRs, different groups of CBSRs may correspond to different measurement assumptions.

For example, the n CSI-RSs respectively correspond to the n different network devices, and any two or more of the n different network devices may form a coordination set that provides a communication service. Each coordination set may be referred to as a measurement assumption, that is, the n CSI-RSs correspond to a plurality of measurement assumptions, and one of the plurality of measurement assumptions corresponds to the m CSI-RSs, so that the measurement assumption can determine the m CSI-RSs corresponding to the PMI. In addition, in this implementation, the CBSR configuration information is used to configure a plurality of groups of pieces of CBSR information, where the plurality of groups of pieces of CBSR information are in one-to-one correspondence with the plurality of measurement assumptions, and one group of the plurality of groups of pieces of CBSR information include the m pieces of CBSR information. In other words, the CBSR configuration information in the first configuration information is used to configure the CBSR in a configuration manner in which the "measurement assumption" is used as a granularity.

In another possible implementation, that the CBSR configuration information is used to configure a plurality of CBSRs includes: The CBSR configuration information is used to configure n CBSRs. Before the terminal device determines the PMI based on the m CSI-RSs and m of the plurality of CBSRs in step S603, the method further includes: The terminal device determines the m CBSRs from the n CBSRs.

Specifically, the CBSR configuration information in the first configuration information is used to configure the n CBSRs, so that before the terminal device determines the PMI, the terminal device uses the m CBSRs included in the n CBSRs as one of bases for determining the PMI. In other words, the CBSR configuration information in the first configuration information is used to configure the CBSR in a configuration manner in which the "CSI-RS" is used as a granularity, so that the terminal device can use the m CBSRs included in the n CBSRs as one of the bases for determining the PMI.

S604: The terminal device sends the PMI.

In this embodiment, the terminal device sends the PMI in step S604. Correspondingly, the network device receives the PMI in step S604.

In a possible implementation, the PMI sent by the terminal device in step S604 is included in CSI, and the CSI further includes at least one of the following: indexes of CSI-RS port sets corresponding to the m CSI-RSs; or indexes of the m CSI-RSs. Specifically, after the terminal device receives the n CSI-RSs, the PMI sent by the terminal device is determined based on some or all of the n CSI-RSs (that is, the m CSI-RSs). Therefore, the terminal device may include at least one of the foregoing information in the CSI, so that a receiver of the CSI determines the m CSI-RSs corresponding to the PMI.

According to the technical solution shown in FIG. 6, the first configuration information received by the terminal device in step S601 includes the configuration information of the n CSI-RSs and the CBSR configuration information corresponding to the n CSI-RSs, and the CBSR configuration information is used to configure the plurality of CBSRs. Then, after the terminal device receives the n CSI-RSs based on the configuration information of the n CSI-RSs in the first configuration information in step S602, the terminal device determines the PMI based on the CBSR configuration information in the first configuration information in step S603, where m is the integer greater than 1, that is, the m CSI-RSs come from different network devices. In other words, both configuration information used by the terminal device to receive CSI-RSs from different network devices and configuration information of CBSRs corresponding to the different network devices are located in the first configuration information. In comparison with an implementation in which the terminal device needs to respectively receive configuration information from the different network devices, to respectively determine the configuration information of the CSI-RSs of the different network devices and the configuration information of the CBSRs corresponding to the different network devices, overheads can be reduced, and communication efficiency can be improved.

In addition, the foregoing technical solution may be applied to an application scenario in which a data stream received by the terminal device comes from the different network devices, so that the CBSRs of the different network devices are configured in the scenario. In this way, the terminal device determines that, in the application scenario, the CBSRs corresponding to the different network devices may be obtained based on the first configuration information, and the PMI may be sent based on the CBSR configuration information.

The foregoing describes this application from a perspective of the method, and the following describes apparatuses in this application.

FIG. 7 is a diagram of a communication apparatus 700 according to this application. The communication apparatus 700 may implement functions of the terminal device/network device in the foregoing method embodiments, and therefore can also implement beneficial effects of the foregoing method embodiments.

When the communication apparatus 700 is configured to implement functions of the terminal device in the embodiment shown in FIG. 3 and any optional embodiment thereof, a transceiver unit 701 and a processing unit 702 included in the communication apparatus 700 are configured to perform the following implementation process.

The transceiver unit 701 is configured to receive first configuration information, where the first configuration information includes configuration information of n channel state information reference signals CSI-RSs, and n is an integer greater than 1.

The transceiver unit 701 is further configured to receive the n CSI-RSs based on the first configuration information.

The processing unit 702 is configured to determine a channel quality indicator CQI based on m CSI-RSs and a mapping relationship, where the CQI indicates channel quality of a physical downlink shared channel PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

The transceiver unit 701 is further configured to send the CQI.

In a possible implementation, the processing unit 702 is further configured to determine the m CSI-RSs from the n CSI-RSs.

In a possible implementation, the processing unit 702 is specifically configured to determine the m CSI-RSs based on a first parameter and the n CSI-RSs, where the first parameter includes a value of m or a first threshold.

In a possible implementation, the n CSI-RSs correspond to a plurality of measurement assumptions, and the measurement assumption is used to determine the m CSI-RSs corresponding to the CQI.

In a possible implementation, the transceiver unit 701 is further configured to receive first indication information, where the first indication information indicates at least one of the plurality of measurement assumptions.

One measurement assumption is determined from the at least one measurement assumption, where the measurement assumption corresponds to the m CSI-RSs.

In a possible implementation, the transceiver unit 701 is further configured to receive second indication information, where the second indication information indicates a power offset corresponding to each CSI-RS in the at least one of the plurality of measurement assumptions. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

The processing unit 702 is specifically configured to determine the CQI based on the second indication information, the m CSI-RSs, and the mapping relationship.

In a possible implementation, the transceiver unit 701 is further configured to receive second indication information, where the second indication information indicates a power offset corresponding to each of the n CSI-RSs. The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

The processing unit 702 is specifically configured to determine the CQI based on the second indication information, the m CSI-RSs, and the mapping relationship.

In a possible implementation, the power offset that corresponds to each CSI-RS and that is indicated by the second indication information is the same.

In a possible implementation, each piece of configuration information in the configuration information of the n CSI-RSs indicates one CSI-RS port set.

The CSI-RS port set includes one CSI-RS resource, and n CSI-RS resources belong to a same CSI-RS resource set; or

the CSI-RS port set includes at least one port, and ports included in n CSI-RS port sets belong to a same CSI-RS resource.

In a possible implementation, the CQI is included in CSI, and the CSI further includes at least one of the following:

indexes of CSI-RS port sets corresponding to the m CSI-RSs;

the indexes of the m CSI-RSs; or

a PMI, where the PMI indicates precoding matrices corresponding to CSI-RS port sets corresponding to the m CSI-RSs.

In a possible implementation, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=n-1}^{(3000)}(i) \\ \cdots \\ y_{j=n-1}^{(3000+P_{n-1}-1)}(i) \end{bmatrix} = \begin{bmatrix} W_0(i) \\ \vdots \\ W_{n-1}(i) \end{bmatrix} \begin{bmatrix} x^{(0)}(i) \\ \cdots \\ x^{(v-1)}(i) \end{bmatrix}$$

$x^{(k)}(i)$, where $k = 0,1, ...,$ or $v-1$, represents a $k^{th}$ data stream of a PDSCH on an $i^{th}$ orthogonal frequency division multiplexing OFDM symbol; $y_j^{(p)}(i)$, where $j=0, 1, ...,$ or $n-1$, and $p=3000, ...,$ or $3000 + P_{n-1}$, represents a data stream that is of the PDSCH and that is transmitted on a $q^{th}$ CSI-RS port of a $j^{th}$ CSI-RS, where $q=0, ...,$ or $P_j-1$; and $W_j(i)$ represents a precoding matrix that corresponds to the $j^{th}$ CSI-RS and to which a data stream of the PDSCH is mapped.

In a possible implementation, in $W_0(i), ...,$ and $W_{n-1}(i)$, a quantity of non-zero matrices is m.

In a possible implementation, the mapping relationship satisfies:

$$\begin{bmatrix} y_{j=0}^{(3000)}(i) \\ \cdots \\ y_{j=0}^{(3000+P_0-1)}(i) \\ \cdots \\ y_{j=m-1}^{(3000)}(i) \\ \cdots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \cdots \\ x^{(v-1)}(i) \end{bmatrix}$$

$x^{(k)}(i)$, where $k = 0, 1, ...,$ or $v-1$, represents a $k^{th}$ data stream of a PDSCH on an $i^{th}$ orthogonal frequency division multiplexing OFDM symbol; $y_j^{(p)}(i)$, where $j=0, 1, ...,$ or $m-1$, and $p=3000, ...,$ or $3000 + P_{m-1}$, represents a data stream that is of the PDSCH and that is transmitted on a $q^{th}$ CSI-RS port of a $j^{th}$ CSI-RS, where $q=0, ...,$ or $P_j-1$; and $W_j(i)$ represents a precoding matrix that corresponds to the $j^{th}$ CSI-RS and to which a data stream of the PDSCH is mapped.

When the communication apparatus 700 is configured to implement functions of the network device in the embodiment shown in FIG. 3 and any optional embodiment thereof, a transceiver unit 701 and a processing unit 702 included in the communication apparatus 700 are configured to perform the following implementation process.

The processing unit 702 is configured to determine first configuration information, where the first configuration information includes configuration information of n channel state information reference signals CSI-RSs, and n is an integer greater than 1.

The transceiver unit 701 is configured to send one of the n CSI-RSs based on the first configuration information.

The transceiver unit 701 is further configured to receive a channel quality indicator CQI, where the CQI is determined based on m CSI-RSs and a mapping relationship. The CQI indicates channel quality of a physical downlink shared channel PDSCH, the mapping relationship is a mapping relationship between a data stream of the PDSCH and CSI-RS ports corresponding to the m CSI-RSs, the m CSI-RSs are included in the n CSI-RSs, m is an integer greater than 1, and m is less than or equal to n.

In a possible implementation, the n CSI-RSs correspond to a plurality of measurement assumptions, and the measurement assumption is used to determine the m CSI-RSs corresponding to the CQI.

In a possible implementation, the transceiver unit 701 is further configured to send first indication information, where the first indication information indicates at least one of the plurality of measurement assumptions.

One of the at least one measurement assumption corresponds to the m CSI-RSs.

In a possible implementation, the transceiver unit 701 is further configured to send second indication information, where the second indication information indicates a power offset corresponding to each CSI-RS in the at least one of the plurality of measurement assumptions.

The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

In a possible implementation, the transceiver unit 701 is further configured to send second indication information, where the second indication information indicates a power offset corresponding to each of the n CSI-RSs.

The power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

In a possible implementation, the power offset that corresponds to each CSI-RS and that is indicated by the second indication information is the same.

In a possible implementation, each piece of configuration information in the configuration information of the n CSI-RSs indicates one CSI-RS port set.

The CSI-RS port set includes one CSI-RS resource, and n CSI-RS resources belong to a same CSI-RS resource set; or

the CSI-RS port set includes at least one port, and ports included in n CSI-RS port sets belong to a same CSI-RS resource.

In a possible implementation, the CQI is included in CSI, and the CSI further includes at least one of the following:

indexes of CSI-RS port sets corresponding to the m CSI-RSs;
the indexes of the m CSI-RSs; or
a PMI, where the PMI indicates precoding matrices of CSI-RS port sets corresponding to the m CSI-RSs.

In a possible implementation, the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=n-1}^{(3000)}(i) \\
\cdots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\cdots \\
x^{(v-1)}(i)
\end{bmatrix}
$$

$x^{(k)}(i)$, where $k = 0, 1, ...,$ or $v-1$, represents a $k^{th}$ data stream of a PDSCH on an $i^{th}$ orthogonal frequency division multiplexing OFDM symbol; $y_j^{(p)}(i)$, where $j=0, 1, ...,$ or $n-1$, and $p=3000, ...,$ or $3000 + P_{n-1}$, represents a data stream that is of the PDSCH and that is transmitted on a $q^{th}$ CSI-RS port of a $j^{th}$ CSI-RS, where $q=0, ...,$ or $P_j-1$; and $W_j(i)$ represents a precoding matrix that corresponds to the $j^{th}$ CSI-RS and to which a data stream of the PDSCH is mapped.

In a possible implementation,
in $W_0(i), ...,$ and $W_{n-1}(i)$, a quantity of non-zero matrices is m.

In a possible implementation, the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=m-1}^{(3000)}(i) \\
\cdots \\
y_{j=m-1}^{(3000+P_{m-1}-1)}(i)
\end{bmatrix}
=
\begin{bmatrix}
W_0(i) \\
\vdots \\
W_{m-1}(i)
\end{bmatrix}
\begin{bmatrix}
x^{(0)}(i) \\
\cdots \\
x^{(v-1)}(i)
\end{bmatrix}
$$

$x^{(k)}(i)$, where $k = 0, 1, ...,$ or $v-1$, represents a $k^{th}$ data stream of a PDSCH on an $i^{th}$ orthogonal frequency division multiplexing OFDM symbol; $y_j^{(p)}(i)$, where $j=0, 1, ...,$ or $m-1$, and $p=3000, ...,$ or $3000 + P_{m-1}$, represents a data stream that is of the PDSCH and that is transmitted on a $q^{th}$ CSI-RS port of a $j^{th}$ CSI-RS, where $q=0, ...,$ or $P_j-1$; and $W_j(i)$ represents

a precoding matrix that corresponds to the j$^{th}$ CSI-RS and to which a data stream of the PDSCH is mapped.

When the communication apparatus 700 is configured to implement functions of the terminal device in the embodiment shown in FIG. 6 and any optional embodiment thereof, a transceiver unit 701 and a processing unit 702 included in the communication apparatus 700 are configured to perform the following implementation process.

The transceiver unit 701 is configured to receive first configuration information, where the first configuration information includes configuration information of n CSI-RSs and CBSR configuration information corresponding to the n CSI-RSs, the CBSR configuration information is used to configure a plurality of CBSRs, and n is an integer greater than 1.

The transceiver unit 701 is further configured to receive the n CSI-RSs based on the first configuration information.

The processing unit 702 is configured to determine a PMI based on m CSI-RSs and m of the plurality of CBSRs, where the m CSI-RSs are included in the n CSI-RSs, m is an integer greater than 1, m is less than or equal to n, and the m CSI-RSs are in one-to-one correspondence with m pieces of CBSR information.

The PMI is sent.

In a possible implementation, that the CBSR configuration information is used to configure a plurality of CBSRs includes: The CBSR configuration information is used to configure at least one group of CBSRs, where each group of CBSRs include at least two CBSRs.

Before the determining a PMI based on m CSI-RSs and m of the plurality of CBSRs, the apparatus further includes:

determining one group of CBSRs from the at least one group of CBSRs, where the group of CBSRs include the m CBSRs.

In a possible implementation, that the CBSR configuration information is used to configure a plurality of CBSRs includes: The CBSR configuration information is used to configure n CBSRs.

Before the determining a PMI based on m CSI-RSs and m of the plurality of CBSRs, the apparatus further includes:

determining the m CBSRs from the n CBSRs.

When the communication apparatus 700 is configured to implement functions of the network device in the embodiment shown in FIG. 6 and any optional embodiment thereof, a transceiver unit 701 and a processing unit 702 included in the communication apparatus 700 are configured to perform the following implementation process.

The processing unit 702 is configured to determine first configuration information, where the first configuration information includes configuration information of n CSI-RSs and CBSR configuration information corresponding to the n CSI-RSs, the CBSR configuration information is used to configure a plurality of CBSRs, and n is an integer greater than 1.

The transceiver unit 701 is configured to send one of the n CSI-RSs based on the first configuration information.

The transceiver unit 701 is further configured to receive a PMI, where the PMI corresponds to m CSI-RSs, the m CSI-RSs are included in the n CSI-RSs, m is an integer greater than 1, m is less than or equal to n, and the m CSI-RSs are in one-to-one correspondence with m pieces of CBSR information configured by using the CBSR configuration information.

In a possible implementation, that the CBSR configuration information is used to configure a plurality of CBSRs includes: The CBSR configuration information is used to configure at least one group of CBSRs, where each group of CBSRs include at least two CBSRs.

One group of the at least one group of CBSRs include m CBSRs.

In a possible implementation, that the CBSR configuration information is used to configure a plurality of CBSRs includes: The CBSR configuration information is used to configure n CBSRs.

The n CBSRs include m CBSRs.

It should be noted that for content such as an information execution process of the units of the communication apparatus 700, refer to the descriptions in the foregoing method embodiments of this application. Details are not described herein again.

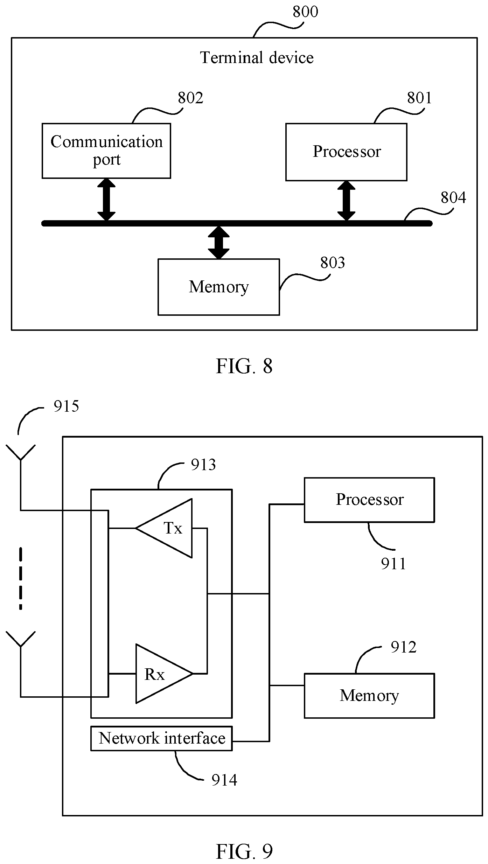

FIG. 8 is a diagram of a possible logical structure of the terminal device in the foregoing embodiments, that is, a terminal device 800 according to an embodiment of this application. The terminal device 800 may include but is not limited to at least one processor 801 and a communication port 802. Further, optionally, the apparatus may include at least one of a memory 803 and a bus 804. In this embodiment of this application, the at least one processor 801 is configured to perform control processing on an action of the terminal device 800.

In addition, the processor 801 may be a central processing unit, a general-purpose processor, a digital signal processor, an application-specific integrated circuit, a field programmable gate array or another programmable logic device, a transistor logic device, a hardware component, or any combination thereof. The processor may implement or execute logic blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the terminal device 800 shown in FIG. 8 may be specifically configured to: implement other steps implemented by the terminal device in the foregoing corresponding method embodiments, and implement technical effects corresponding to the terminal device. For a specific implementation of the terminal device shown in FIG. 8, refer to the descriptions in the foregoing method embodiments. Details are not described herein again.

FIG. 9 is a diagram of a structure of the network device in the foregoing embodiments according to an embodiment of this application. For the structure of the network device, refer to the structure shown in FIG. 9.

The network device includes at least one processor 911 and at least one network interface 914. Further, optionally, the network device includes at least one memory 912, at least one transceiver 913, and one or more antennas 915. The processor 911, the memory 912, the transceiver 913, and the network interface 914 are connected, for example, connected through a bus. In this embodiment of this application, the connection may include various types of interfaces, transmission lines, buses, or the like. This is not limited in this embodiment. The antenna 915 is connected to the transceiver 913. The network interface 914 is configured to enable the network device to communicate with another communication device through a communication link. For example, the network interface 914 may include a network interface between the network device and a core network device, for example, an S1 interface. The network interface may include a network interface between the network device and another network device (for example, another network device or a core network device), for example, an X2 or Xn interface.

The processor 911 is mainly configured to: process a communication protocol and communication data, control the entire network device, execute a software program, and process data of the software program, for example, is configured to support the network device in performing actions described in embodiments. The network device may include a baseband processor and a central processing unit. The baseband processor is mainly configured to process the communication protocol and the communication data. The central processing unit is mainly configured to control the entire terminal device, execute the software program, and process the data of the software program. The processor 911 in FIG. 9 may integrate functions of the baseband processor and the central processing unit. A person skilled in the art may understand that the baseband processor and the central processing unit may alternatively be independent processors and are interconnected by using a technology such as a bus. A person skilled in the art may understand that a terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the memory in a form of the software program. The processor executes the software program to implement a baseband processing function.

The memory is mainly configured to store the software program and the data. The memory 912 may exist independently, and is connected to the processor 911. Optionally, the memory 912 may be integrated with the processor 911, for example, integrated into a chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the network device and the terminal, and the transceiver 913 may be connected to the antenna 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 performs further processing, for example, demodulation processing and decoding processing, on the digital baseband signal or the digital intermediate frequency signal. In addition, the transmitter Tx of the transceiver 913 is further configured to: receive a modulated digital baseband signal or digital intermediate frequency signal from the processor 911, convert the modulated digital baseband signal or digital intermediate frequency signal into a radio frequency signal, and send the radio frequency signal through the one or more antennas 915. Specifically, the receiver Rx may selectively perform one-level or multi-level down frequency mixing processing and analog-to-digital conversion processing on the radio frequency signal, to obtain the digital baseband signal or the digital intermediate frequency signal. A sequence of the down frequency mixing processing and the analog-to-digital conversion processing is adjustable. The transmitter Tx may selectively perform one-level or multi-level up frequency mixing processing and digital-to-analog conversion processing on the modulated digital baseband signal or digital intermediate frequency signal, to obtain the radio frequency signal. A sequence of the up frequency mixing processing and the digital-to-analog conversion processing is adjustable. The digital baseband signal and the digital intermediate frequency signal may be collectively referred to as digital signals.

The transceiver may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the network device shown in FIG. 9 may be specifically configured to: implement steps implemented by the network device in the foregoing method embodiments, and implement technical effects corresponding to the network device. For a specific implementation of the network device shown in FIG. 9, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the foregoing possible implementations of the terminal device.

An embodiment of this application further provides a computer program product storing one or more computers. When the computer program product is executed by a processor, the processor performs the method in the foregoing possible implementations of the network device.

An embodiment of this application further provides a chip system. The chip system includes at least one processor, configured to support a terminal device in implementing functions in the foregoing possible implementations of the terminal device. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete device.

An embodiment of this application further provides a chip system. The chip system includes at least one processor, configured to support a network device in implementing functions in the foregoing possible implementations of the network device. Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete device. The network device may be specifically the network device in the foregoing method embodiments.

An embodiment of this application further provides a communication system. A network system architecture includes the terminal device and the network device in any one of the foregoing embodiments.

In several embodiments provided in this application, it should be understood that the disclosed system, apparatus, and method may be implemented in another manner. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   receiving first configuration information, wherein the first configuration information comprises configuration information of n channel state information reference signals CSI-RSs, and n is an integer greater than 1;
   receiving the n CSI-RSs based on the first configuration information;
   determining a channel quality indicator CQI based on m CSI-RSs and a mapping relationship, wherein the CQI indicates channel quality of a physical downlink shared channel PDSCH, the mapping relationship is a mapping relationship between a data stream of the PDSCH and CSI-RS ports corresponding to the m CSI-RSs, the m CSI-RSs are comprised in the n CSI-RSs, m is an integer greater than 1, and m is less than or equal to n; and
   sending the CQI.

2. The method according to claim 1, wherein before the determining a CQI based on m CSI-RSs and a mapping relationship, the method further comprises:
   determining the m CSI-RSs from the n CSI-RSs.

3. The method according to claim 2, wherein the determining the m CSI-RSs from the n CSI-RSs comprises:
   determining the m CSI-RSs based on a first parameter and the n CSI-RSs, wherein the first parameter comprises a value of m or a first threshold.

4. The method according to any one of claims 1 to 3, wherein the n CSI-RSs correspond to a plurality of measurement assumptions, and the measurement assumption is used to determine the m CSI-RSs corresponding to the CQI.

5. The method according to claim 4, wherein the method further comprises:

   receiving first indication information, wherein the first indication information indicates at least one of the plurality of measurement assumptions; and
   determining one measurement assumption from the at least one measurement assumption, wherein the measurement assumption corresponds to the m CSI-RSs.

6. The method according to claim 4 or 5, wherein the method further comprises: receiving second indication information, wherein the second indication information indicates a power offset corresponding to each CSI-RS in the at least one of the plurality of measurement assumptions, wherein

   the power offset indicates a ratio of first signal energy to second signal energy, the first signal energy is energy per resource element EPRE of the data stream that is of the PDSCH and that is mapped to a CSI-RS port corresponding to each CSI-RS, and the second signal energy is EPRE of each CSI-RS; and
   the determining a CQI based on m CSI-RSs and a mapping relationship comprises:
   determining the CQI based on the second indication information, the m CSI-RSs, and the mapping relationship.

7. The method according to any one of claims 1 to 3, wherein the method further comprises: receiving second indication information, wherein the second indication information indicates a power offset corresponding to each of the n CSI-RSs, wherein

   the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS; and

the determining a CQI based on m CSI-RSs and a mapping relationship comprises:
determining the CQI based on the second indication information, the m CSI-RSs, and the mapping relationship.

8. The method according to claim 6 or 7, wherein the power offset that corresponds to each CSI-RS and that is indicated by the second indication information is the same.

9. The method according to any one of claims 1 to 8, wherein each piece of configuration information in the configuration information of the n CSI-RSs indicates one CSI-RS port set; and

the CSI-RS port set comprises one CSI-RS resource, and n CSI-RS resources belong to a same CSI-RS resource set; or
the CSI-RS port set comprises at least one port, and ports comprised in n CSI-RS port sets belong to a same CSI-RS resource.

10. The method according to any one of claims 1 to 9, wherein the CQI is comprised in channel state information CSI, and the CSI further comprises at least one of the following:

indexes of CSI-RS port sets corresponding to the m CSI-RSs;
indexes of the m CSI-RSs; or
a precoding matrix indicator PMI, wherein the PMI indicates precoding matrices corresponding to CSI-RS port sets corresponding to the m CSI-RSs.

11. The method according to any one of claims 1 to 10, wherein the mapping relationship satisfies:

$$
\begin{bmatrix}
y_{j=0}^{(3000)}(i) \\
\dots \\
y_{j=0}^{(3000+P_0-1)}(i) \\
\dots \\
y_{j=n-1}^{(3000)}(i) \\
\dots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\dots \\
x^{(v-1)}(i)
\end{bmatrix},
$$

wherein
$x^{(k)}(i)$, wherein $k = 0,1, ...,$ or $v-1$, represents a $k^{th}$ data stream of a PDSCH on an $i^{th}$ orthogonal frequency division multiplexing OFDM symbol; $y_j^{(p)}(i)$ wherein $j=0, 1, ...,$ or $n-1$, and $p=3000, ...,$ or $3000 + P_{n-1}$, represents a data stream that is of the PDSCH and that is transmitted on a $q^{th}$ CSI-RS port of a $j^{th}$ CSI-RS, wherein $q=0, ...,$ or $P_j-1$; and $W_j(i)$ represents a precoding matrix that corresponds to the $j^{th}$ CSI-RS and to which a data stream of the PDSCH is mapped.

12. The method according to claim 11, wherein
in $W_0(i), ...,$ and $W_{n-1}(i)$, a quantity of non-zero matrices is m.

13. The method according to any one of claims 1 to 10, wherein the mapping relationship satisfies:

$$
\begin{bmatrix}
y_{j=0}^{(3000)}(i) \\
\dots \\
y_{j=0}^{(3000+P_0-1)}(i) \\
\dots \\
y_{j=m-1}^{(3000)}(i) \\
\dots \\
y_{j=m-1}^{(3000+P_{m-1}-1)}(i)
\end{bmatrix}
=
\begin{bmatrix}
W_0(i) \\
\vdots \\
W_{m-1}(i)
\end{bmatrix}
\begin{bmatrix}
x^{(0)}(i) \\
\dots \\
x^{(v-1)}(i)
\end{bmatrix},
$$

wherein

$x^{(k)}(i)$, wherein k = 0, 1, ..., or v- 1, represents a $k^{th}$ data stream of a PDSCH on an $i^{th}$ orthogonal frequency division multiplexing OFDM symbol; $y_j^{(p)}(i)$, wherein j=0, 1, ..., or m-1, and p=3000, ..., or 3000 + $P_{m-1}$, represents a data stream that is of the PDSCH and that is transmitted on a $q^{th}$ CSI-RS port of a $j^{th}$ CSI-RS, wherein q=0, ..., or $P_j$-1; and $W_j$(i) represents a precoding matrix that corresponds to the $j^{th}$ CSI-RS and to which a data stream of the PDSCH is mapped.

14. A communication method, comprising:

determining first configuration information, wherein the first configuration information comprises configuration information of n channel state information reference signals CSI-RSs, and n is an integer greater than 1;
sending one of the n CSI-RSs based on the first configuration information; and
receiving a channel quality indicator CQI, wherein the CQI is determined based on m CSI-RSs and a mapping relationship, the CQI indicates channel quality of a physical downlink shared channel PDSCH, the mapping relationship is a mapping relationship between a data stream of the PDSCH and CSI-RS ports corresponding to the m CSI-RSs, the m CSI-RSs are comprised in the n CSI-RSs, m is an integer greater than 1, and m is less than or equal to n.

15. The method according to claim 14, wherein the n CSI-RSs correspond to a plurality of measurement assumptions, and the measurement assumption is used to determine the m CSI-RSs corresponding to the CQI.

16. The method according to claim 15, wherein the method further comprises: sending first indication information, wherein the first indication information indicates at least one of the plurality of measurement assumptions, wherein one of the at least one measurement assumption corresponds to the m CSI-RSs.

17. The method according to claim 15 or 16, wherein the method further comprises: sending second indication information, wherein the second indication information indicates a power offset corresponding to each CSI-RS in the at least one of the plurality of measurement assumptions, wherein the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

18. The method according to any one of claims 14 to 17, wherein the method further comprises: sending second indication information, wherein the second indication information indicates a power offset corresponding to each of the n CSI-RSs, wherein the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

19. The method according to claim 17 or 18, wherein the power offset that corresponds to each CSI-RS and that is indicated by the second indication information is the same.

20. The method according to any one of claims 14 to 19, wherein each piece of configuration information in the configuration information of the n CSI-RSs indicates one CSI-RS port set; and the CSI-RS port set comprises one CSI-RS resource, and n CSI-RS resources belong to a same CSI-RS resource set; or the CSI-RS port set comprises at least one port, and ports comprised in n CSI-RS port sets belong to a same CSI-RS resource.

21. The method according to any one of claims 14 to 20, wherein the CQI is comprised in channel state information CSI, and the CSI further comprises at least one of the following:

indexes of CSI-RS port sets corresponding to the m CSI-RSs;
indexes of the m CSI-RSs; or
a precoding matrix indicator PMI, wherein the PMI indicates precoding matrices of CSI-RS port sets corresponding to the m CSI-RSs.

22. The method according to any one of claims 14 to 21, wherein the mapping relationship satisfies:

$$\begin{bmatrix} y_{j=0}^{(3000)}(i) \\ \dots \\ y_{j=0}^{(3000+P_0-1)}(i) \\ \dots \\ y_{j=n-1}^{(3000)}(i) \\ \dots \\ y_{j=n-1}^{(3000+P_{n-1}-1)}(i) \end{bmatrix} = \begin{bmatrix} W_0(i) \\ \vdots \\ W_{n-1}(i) \end{bmatrix} \begin{bmatrix} x^{(0)}(i) \\ \dots \\ x^{(v-1)}(i) \end{bmatrix},$$

wherein

$x^{(k)}(i)$, wherein k = 0,1, ..., or v-1, represents a $k^{th}$ data stream of a PDSCH on an $i^{th}$ orthogonal frequency division multiplexing OFDM symbol; $y_j^{(p)}(i)$, wherein j=0, 1, ..., or n-1, and p=3000, ..., or 3000 + $P_{n-1}$, represents a data stream that is of the PDSCH and that is transmitted on a $q^{th}$ CSI-RS port of a $j^{th}$ CSI-RS, wherein q=0, ..., or $P_j$-1; and $W_j$(i) represents a precoding matrix that corresponds to the $j^{th}$ CSI-RS and to which a data stream of the PDSCH is mapped.

23. The method according to claim 22, wherein
in $W_0$(i), ..., and $W_{n-1}$(i), a quantity of non-zero matrices is m.

24. The method according to any one of claims 14 to 21, wherein the mapping relationship satisfies:

$$\begin{bmatrix} y_{j=0}^{(3000)}(i) \\ \dots \\ y_{j=0}^{(3000+P_0-1)}(i) \\ \dots \\ y_{j=m-1}^{(3000)}(i) \\ \dots \\ y_{j=m-1}^{(3000+P_{m-1}-1)}(i) \end{bmatrix} = \begin{bmatrix} W_0(i) \\ \vdots \\ W_{m-1}(i) \end{bmatrix} \begin{bmatrix} x^{(0)}(i) \\ \dots \\ x^{(v-1)}(i) \end{bmatrix},$$

wherein

$x^{(k)}(i)$, wherein k = 0, 1, ..., or v-1, represents a $k^{th}$ data stream of a PDSCH on an $i^{th}$ orthogonal frequency division multiplexing OFDM symbol; $y_j^{(p)}(i)$, wherein j=0, 1, ..., or m-1, and p=3000, ..., or 3000 + $P_{m-1}$, represents a data stream that is of the PDSCH and that is transmitted on a $q^{th}$ CSI-RS port of a $j^{th}$ CSI-RS, wherein q=0, ..., or $P_j$-1; and $W_j$(i) represents a precoding matrix that corresponds to the $j^{th}$ CSI-RS and to which a data stream of the PDSCH is mapped.

25. A communication apparatus, comprising a transceiver unit and a processing unit, wherein

the transceiver unit is configured to receive first configuration information, wherein the first configuration information comprises configuration information of n channel state information reference signals CSI-RSs, and n is an integer greater than 1;
the transceiver unit is further configured to receive the n CSI-RSs based on the first configuration information;
the processing unit is configured to determine a channel quality indicator CQI based on m CSI-RSs and a mapping relationship, wherein the CQI indicates channel quality of a physical downlink shared channel PDSCH, the mapping relationship is a mapping relationship between a data stream of the PDSCH and CSI-RS ports corresponding to the m CSI-RSs, the m CSI-RSs are comprised in the n CSI-RSs, m is an integer greater than 1, and m is less than or equal to n; and
the transceiver unit is further configured to send the CQI.

26. The apparatus according to claim 25, wherein the processing unit is further configured to determine the m CSI-RSs

from the n CSI-RSs.

27. The apparatus according to claim 26, wherein the processing unit is specifically configured to determine the m CSI-RSs based on a first parameter and the n CSI-RSs, wherein the first parameter comprises a value of m or a first threshold.

28. The apparatus according to any one of claims 25 to 27, wherein the n CSI-RSs correspond to a plurality of measurement assumptions, and the measurement assumption is used to determine the m CSI-RSs corresponding to the CQI.

29. The apparatus according to claim 28, wherein

the transceiver unit is further configured to receive first indication information, wherein the first indication information indicates at least one of the plurality of measurement assumptions; and
the processing unit is further configured to determine one measurement assumption from the at least one measurement assumption, wherein the measurement assumption corresponds to the m CSI-RSs.

30. The apparatus according to claim 28 or 29, wherein the transceiver unit is further configured to receive second indication information, wherein the second indication information indicates a power offset corresponding to each CSI-RS in the at least one of the plurality of measurement assumptions, wherein

the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS; and
the processing unit is specifically configured to determine the CQI based on the second indication information, the m CSI-RSs, and the mapping relationship.

31. The apparatus according to any one of claims 25 to 27, wherein the transceiver unit is further configured to receive second indication information, wherein the second indication information indicates a power offset corresponding to each of the n CSI-RSs, wherein

the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS; and
the processing unit is specifically configured to determine the CQI based on the second indication information, the m CSI-RSs, and the mapping relationship.

32. The apparatus according to claim 30 or 31, wherein the power offset that corresponds to each CSI-RS and that is indicated by the second indication information is the same.

33. The apparatus according to any one of claims 25 to 32, wherein each piece of configuration information in the configuration information of the n CSI-RSs indicates one CSI-RS port set; and

the CSI-RS port set comprises one CSI-RS resource, and n CSI-RS resources belong to a same CSI-RS resource set; or
the CSI-RS port set comprises at least one port, and ports comprised in n CSI-RS port sets belong to a same CSI-RS resource.

34. The apparatus according to any one of claims 25 to 33, wherein the CQI is comprised in channel state information CSI, and the CSI further comprises at least one of the following:

indexes of CSI-RS port sets corresponding to the m CSI-RSs;
indexes of the m CSI-RSs; or
a precoding matrix indicator PMI, wherein the PMI indicates precoding matrices corresponding to CSI-RS port sets corresponding to the m CSI-RSs.

35. The apparatus according to any one of claims 25 to 34, wherein the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=n-1}^{(3000)}(i) \\
\cdots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\cdots \\
x^{(v-1)}(i)
\end{bmatrix},
$$

wherein

$x^{(k)}(i)$, wherein k = 0, 1, ..., or v-1, represents a $k^{th}$ data stream of a PDSCH on an $i^{th}$ orthogonal frequency division multiplexing OFDM symbol; $y_j^{(p)}(i)$, wherein j=0, 1, ..., or n-1, and p=3000, ..., or 3000 + $P_{n-1}$, represents a data stream that is of the PDSCH and that is transmitted on a $q^{th}$ CSI-RS port of a $j^{th}$ CSI-RS, wherein q=0, ..., or $P_j$-1; and $W_j$(i) represents a precoding matrix that corresponds to the $j^{th}$ CSI-RS and to which a data stream of the PDSCH is mapped.

36. The apparatus according to claim 35, wherein
in $W_0(i)$, ..., and $W_{n-1}(i)$, a quantity of non-zero matrices is m.

37. The apparatus according to any one of claims 25 to 34, wherein the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=m-1}^{(3000)}(i) \\
\cdots \\
y_{j=m-1}^{(3000+P_{m-1}-1)}(i)
\end{bmatrix}
=
\begin{bmatrix}
W_0(i) \\
\vdots \\
W_{m-1}(i)
\end{bmatrix}
\begin{bmatrix}
x^{(0)}(i) \\
\cdots \\
x^{(v-1)}(i)
\end{bmatrix},
$$

wherein

$x^{(k)}(i)$, wherein k = 0, 1, ..., or v-1, represents a $k^{th}$ data stream of a PDSCH on an $i^{th}$ orthogonal frequency division multiplexing OFDM symbol; $y_j^{(p)}(i)$, wherein j=0, 1, ..., or m-1, and p=3000, ..., or 3000 + $P_{m-1}$, represents a data stream that is of the PDSCH and that is transmitted on a $q^{th}$ CSI-RS port of a $j^{th}$ CSI-RS, wherein q=0, ..., or $P_j$-1; and $W_j$(i) represents a precoding matrix that corresponds to the $j^{th}$ CSI-RS and to which a data stream of the PDSCH is mapped.

38. A communication apparatus, comprising a processing unit and a transceiver unit, wherein

the processing unit is configured to determine first configuration information, wherein the first configuration information comprises configuration information of n channel state information reference signals CSI-RSs, and n is an integer greater than 1;
the transceiver unit is configured to send one of the n CSI-RSs based on the first configuration information; and
the transceiver unit is further configured to receive a channel quality indicator CQI, wherein the CQI is determined based on m CSI-RSs and a mapping relationship, the CQI indicates channel quality of a physical downlink shared channel PDSCH, the mapping relationship is a mapping relationship between a data stream of the PDSCH and CSI-RS ports corresponding to the m CSI-RSs, the m CSI-RSs are comprised in the n CSI-RSs, m is an integer greater than 1, and m is less than or equal to n.

39. The apparatus according to claim 38, wherein the n CSI-RSs correspond to a plurality of measurement assumptions, and the measurement assumption is used to determine the m CSI-RSs corresponding to the CQI.

**40.** The apparatus according to claim 39, wherein the transceiver unit is further configured to send first indication information, wherein the first indication information indicates at least one of the plurality of measurement assumptions, wherein

one of the at least one measurement assumption corresponds to the m CSI-RSs.

**41.** The apparatus according to claim 39 or 40, wherein the transceiver unit is further configured to send second indication information, wherein the second indication information indicates a power offset corresponding to each CSI-RS in the at least one of the plurality of measurement assumptions, wherein

the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

**42.** The apparatus according to any one of claims 38 to 40, wherein the transceiver unit is further configured to send second indication information, wherein the second indication information indicates a power offset corresponding to each of the n CSI-RSs, wherein

the power offset indicates a ratio of first signal energy to second signal energy, the first signal energy is EPRE of the data stream that is of the PDSCH and that is mapped to a CSI-RS port corresponding to each CSI-RS, and the second signal energy is EPRE of each CSI-RS.

**43.** The apparatus according to claim 41 or 42, wherein the power offset that corresponds to each CSI-RS and that is indicated by the second indication information is the same.

**44.** The apparatus according to any one of claims 38 to 43, wherein each piece of configuration information in the configuration information of the n CSI-RSs indicates one CSI-RS port set; and

the CSI-RS port set comprises one CSI-RS resource, and n CSI-RS resources belong to a same CSI-RS resource set; or
the CSI-RS port set comprises at least one port, and ports comprised in n CSI-RS port sets belong to a same CSI-RS resource.

**45.** The apparatus according to any one of claims 38 to 44, wherein the CQI is comprised in channel state information CSI, and the CSI further comprises at least one of the following:

indexes of CSI-RS port sets corresponding to the m CSI-RSs;
indexes of the m CSI-RSs; or
a precoding matrix indicator PMI, wherein the PMI indicates precoding matrices of CSI-RS port sets corresponding to the m CSI-RSs.

**46.** The apparatus according to any one of claims 38 to 45, wherein the mapping relationship satisfies:

$$
\begin{bmatrix}
y_{j=0}^{(3000)}(i) \\
\dots \\
y_{j=0}^{(3000+P_0-1)}(i) \\
\dots \\
y_{j=n-1}^{(3000)}(i) \\
\dots \\
y_{j=n-1}^{(3000+P_{n-1}-1)}(i)
\end{bmatrix}
=
\begin{bmatrix}
W_0(i) \\
\vdots \\
W_{n-1}(i)
\end{bmatrix}
\begin{bmatrix}
x^{(0)}(i) \\
\dots \\
x^{(v-1)}(i)
\end{bmatrix},
$$

wherein
$x^{(k)}(i)$, wherein $k = 0, 1, ...,$ or $v-1$, represents a $k^{th}$ data stream of a PDSCH on an $i^{th}$ orthogonal frequency division multiplexing OFDM symbol; $y_j^{(p)}(i)$, wherein $j=0, 1, ...,$ or $n-1$, and $p=3000, ...,$ or $3000 + P_{n-1}$, represents a data stream that is of the PDSCH and that is transmitted on a $q^{th}$ CSI-RS port of a $j^{th}$ CSI-RS, wherein $q=0, ...,$ or $P_j-1$; and $W_j(i)$ represents a precoding matrix that corresponds to the $j^{th}$ CSI-RS and to which a data stream of the PDSCH is mapped.

**47.** The apparatus according to claim 46, wherein
in $W_0(i)$, ..., and $W_{n-1}(i)$, a quantity of non-zero matrices is m.

**48.** The apparatus according to any one of claims 38 to 47, wherein the mapping relationship satisfies:

$$
\begin{bmatrix}
y_{j=0}^{(3000)}(i) \\
\cdots \\
y_{j=0}^{(3000+P_0-1)}(i) \\
\cdots \\
y_{j=m-1}^{(3000)}(i) \\
\cdots \\
y_{j=m-1}^{(3000+P_{m-1}-1)}(i)
\end{bmatrix}
=
\begin{bmatrix}
W_0(i) \\
\vdots \\
W_{m-1}(i)
\end{bmatrix}
\begin{bmatrix}
x^{(0)}(i) \\
\cdots \\
x^{(v-1)}(i)
\end{bmatrix},
$$

wherein
$x^{(k)}(i)$, wherein k = 0,1, ..., or v-1, represents a $k^{th}$ data stream of a PDSCH on an $i^{th}$ orthogonal frequency division multiplexing OFDM symbol; $y_j^{(p)}(i)$, wherein j=0, 1, ..., or m-1, and p=3000, ..., or 3000 + $P_{m-1}$, represents a data stream that is of the PDSCH and that is transmitted on a $q^{th}$ CSI-RS port of a $j^{th}$ CSI-RS, wherein q=0, ..., or $P_j$-1; and $W_j(i)$ represents a precoding matrix that corresponds to the $j^{th}$ CSI-RS and to which a data stream of the PDSCH is mapped.

**49.** A communication apparatus, comprising at least one logic circuit and an input/output interface, wherein

the input/output interface is configured to input first configuration information and n channel state information reference signals CSI-RSs;
the input/output interface is further configured to output channel state information CSI, wherein the CSI comprises a channel quality indicator CQI; and
the logic circuit is configured to perform the method according to any one of claims 1 to 13.

**50.** A communication apparatus, comprising at least one logic circuit and an input/output interface, wherein

the input/output interface is configured to output one of n channel state information reference signals CSI-RSs;
the input/output interface is further configured to input channel state information CSI, wherein the CSI comprises a channel quality indicator CQI; and
the logic circuit is configured to perform the method according to any one of claims 14 to 24.

**51.** A communication system, wherein

the communication system comprises the communication apparatus according to any one of claims 25 to 37 and the communication apparatus according to any one of claims 38 to 48; or
the communication system comprises the communication apparatus according to claim 49 and the communication apparatus according to claim 50.

**52.** A computer-readable storage medium, wherein the medium stores instructions, and when the instructions are executed by a computer, the method according to any one of claims 1 to 24 is implemented.

**53.** A computer program product, comprising instructions, wherein when the instructions are run on a computer, the computer is enabled to perform the method according to any one of claims 1 to 24.

Network device

Terminal
device 1

Terminal
device 2

Terminal
device 3

Terminal
device 5

Terminal
device 4

Terminal
device 6

FIG. 1

TRP 1

TRP 2

UE 1

UE 2

UE 3

UE 4

UE 5

FIG. 2

Terminal device

Network device

S301: First configuration information

S302: CSI-RS

S303: Determine a CQI

S304: CQI

FIG. 3

$TRP_1$

$TRP_2$

$b_0$

$b_1$

$b_2$

$b_1$

$UE_0$

$b_0$

$UE_3$

$UE_1$

$UE_2$

FIG. 4

TRP 1

$b_0$

TRP 3

TRP 2

$b_1$

TRP 4

FIG. 5

Terminal
device

Network
device

S601: First configuration information

S602: CSI-RS

S603: Determine a PMI

S604: PMI

FIG. 6

700

Communication apparatus

701

Transceiver
unit

702

Processing
unit

FIG. 7

800

Terminal device

802

Communication port

801

Processor

804

803

Memory

FIG. 8

915

913

Tx

Processor

911

Rx

912

Memory

Network interface

914

FIG. 9

## INTERNATIONAL SEARCH REPORT

International application No.

**PCT/CN2023/078366**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; USTXT; EPTXT; WOTXT; 3GPP; CNKI: 相干传输, 信道状态信息, 参考信号, 信道质量指示, 物理下行共享信道, 映射, CJT, coherent joint transmission, CSI, channel state information , CSI-RS, channel state information reference signal, CQI, channel quality indicator, PDSCH, physical downlink shared channel, map+

### C. DOCUMENTS CONSIDERED TO BE RELEVANT

| Category* | Citation of document, with indication, where appropriate, of the relevant passages | Relevant to claim No. |
|---|---|---|
| X | CN 113810090 A (HUAWEI TECHNOLOGIES CO., LTD.) 17 December 2021 (2021-12-17) description, paragraphs [0080]-[0278] | 1-53 |
| A | CN 109151887 A (HUAWEI TECHNOLOGIES CO., LTD.) 04 January 2019 (2019-01-04) entire document | 1-53 |
| A | CN 114071535 A (HUAWEI TECHNOLOGIES CO., LTD.) 18 February 2022 (2022-02-18) entire document | 1-53 |
| A | CN 107204794 A (CHINA ACADEMY OF TELECOMMUNICATIONS TECHNOLOGY) 26 September 2017 (2017-09-26) entire document | 1-53 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 May 2023** | **09 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078366**

| Patent document cited in search report | | | Publication date (day/month/year) | Patent family member(s) | Publication date (day/month/year) |
|---|---|---|---|---|---|
| CN | 113810090 | A | 17 December 2021 | None | |
| CN | 109151887 | A | 04 January 2019 | None | |
| CN | 114071535 | A | 18 February 2022 | None | |
| CN | 107204794 | A | 26 September 2017 | None | |

Form PCT/ISA/210 (patent family annex) (July 2022)

**REFERENCES CITED IN THE DESCRIPTION**

**Patent documents cited in the description**

- CN 202210193794